# EUROPÄISCHE PATENTSCHRIFT

(11) **EP 3 580 081 B1**
(45) Veröffentlichungstag und Bekanntmachung des Hinweises auf die Patenterteilung: **17.03.2021**
(21) Anmeldenummer: 18702429.4
(22) Anmeldetag: 18.01.2018
(51) Int. Cl.: B60K 15/035, B60K 15/03, B60K 15/04

(54) **VERFAHREN ZUR STEUERUNG EINES BEFÜLLVORGANGES EINES BETRIEBSFLÜSSIGKEITSBEHÄLTERS UND BETRIEBSFLÜSSIGKEITSBEHÄLTERSYSTEM**
CONTROL METHOD FOR A FILLING OPERATION OF AN OPERATING LIQUID CONTAINER AND OPERATING LIQUID CONTAINER SYSTEM
PROCÉDÉ DE COMMANDE D'UNE OPÉRATION DE REMPLISSAGE D'UN CONTENEUR DE LIQUIDE D'OPÉRATION ET CONTENEUR DE LIQUIDE D'OPÉRATION

(30) Priorität: 10.02.2017 DE 102017202151
(43) Veröffentlichungstag der Anmeldung: 18.12.2019
(73) Patentinhaber: Kautex Textron GmbH & Co. KG, 53229 Bonn (DE)
(72) Erfinder: HEDEVANG, Poul, 53225 Bonn (DE); WIND, Stefan, 53773 Hennef (DE); WOLF, Hartmut, 53639 Königswinter (DE); BARKOW, Axel, 50354 Hürth (DE); BOUFFIER, Roman, 53639 Königswinter (DE); KOUKAN, Ibrahim, 50999 Köln (DE)
(74) Vertreter: Richly & Ritschel Patentanwälte PartG mbB
(86) Internationale Anmeldenummer: PCT/EP2018/051184
(87) Internationale Veröffentlichungsnummer: WO 2018/145873

(56) Entgegenhaltungen:
- EP-A1- 2 993 069
- WO-A1-2015/181375
- WO-A1-2016/116348
- DE-A1- 10 020 000
- DE-A1- 19 738 198
- DE-A1- 19 901 080

## Beschreibung

Die vorliegende Erfindung betrifft ein Verfahren zur Steuerung eines Befüllvorganges eines Betriebsflüssigkeitsbehälters. Ferner betrifft die vorliegende Erfindung ein Betriebsflüssigkeitsbehältersystem zum Ausführen des Verfahrens.

Im Folgenden wird auf als Kraftstoffbehälter bzw. als Kraftstofftanks ausgebildete Betriebsflüssigkeitsbehälter und auf als Kraftstoffbehältersysteme ausgebildete Betriebsflüssigkeitsbehältersysteme Bezug genommen. Betriebsflüssigkeitsbehälter im Sinne der Erfindung sind insbesondere aber nicht ausschließlich Kraftstoffbehälter (für Ottokraftstoffe oder Dieselkraftstoffe), Harnstoffbehälter, Wischwasserbehälter, Ölbehälter, Nebenflüssigkeitsbehälter oder Additivbehälter jeweils für Kraftfahrzeuge. Betriebsflüssigkeitsbehälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen. Weiterhin können auch aus Metall gebildete Betriebsflüssigkeitsbehälter verwendet werden.

Aus dem Stand der Technik ist es bekannt, dass zum Entlüften eines Kraftstoffbehälters dieser zumindest ein Entlüftungsventil aufweist, das wiederum mit einer Entlüftungsleitung zum Ableiten des Überdrucks an die Atmosphäre fluidverbunden ist. Insbesondere bei für Ottokraftstoff ausgebildeten Kraftstoffbehältern sind deren Entlüftungsleitungen häufig mit Aktivkohlefiltern zum Durchleiten und Ausfiltern von Treibstoffdämpfen fluidverbunden. Die durch das Aktivkohlefilter gefilterten Gase werden nach Passieren des Aktivkohlefilters an die Atmosphäre abgegeben. Beim Betanken eines Kraftstoffbehälters befindet sich das Entlüftungsventil in dessen Offenstellung, damit beim Betanken aus dem Kraftstoffbehälter ausgetriebenes Gas (Kraftstoffdampf-Luft-Gemisch) an die Atmosphäre - gegebenenfalls durch ein Aktivkohlefilter gefiltert - abgeleitet werden kann. Ein Befüllstopp bzw. Betankungsstopp wird derart eingeleitet, dass das Entlüftungsventil durch den im Kraftstoffbehälter ansteigenden Kraftstoff verschlossen wird, wodurch ein Ableiten der sich im Kraftstoffbehälter befindlichen Gase/Dämpfe über das Entlüftungsventil unterbunden wird. Durch weiteres Einleiten von Kraftstoff über ein in den Kraftstoffbehälterinnenraum mündendes Einfüllrohr steigt der Druck innerhalb des Kraftstoffbehälters an, so dass auch ein Kraftstoffpegel innerhalb des Einfüllrohrs ansteigt, bis der Kraftstoffpegel ein in das Einfüllrohr eingestecktes Zapfventil verschließt, woraufhin seitens des Zapfventils ein Ausströmen von Kraftstoff beendet wird.

Bei einem plötzlichen Befüllstopp, also dem Beenden des Ausströmens von Kraftstoff aus dem Zapfventil, kann es zu einer Aufwallung des Kraftstoffs im Einfüllrohr kommen, wodurch Kraftstoff aus der Einfüllöffnung des Einfüllrohrs austreten kann.

Nach einem ersten Abschalten des Zapfventils wird seitens des Betankers häufig noch ein Nachtanken durchgeführt, bei dem sukzessive weiterer Kraftstoff in das Einfüllrohr eingeleitet wird. Der in das Einfüllrohr eingeleitete Kraftstoff fließt dann aufgrund einer Sollleckage des Entlüftungsventils und entsprechendem Druckabbau im Kraftstoffbehälter in den Kraftstoffbehälter ein. Dabei kann es bei entsprechenden Nachtankvorgängen zu einem Austreten von Kraftstoff aus dem Einfüllrohr kommen. Ferner besteht das Problem, dass bei einem entsprechenden Nachtanken der Kraftstoffbehälter überfüllt wird

Verfahren zur Steuerung eines Befüllvorgangs eines Betriebsflüssigkeitsbehälters sind jeweils aus der WO 2016/116348 A1 und der DE 197 38 198 A1 bekannt, und Betriebsflüssigkeitsbehältersysteme für Kraftfahrzeuge sind jeweils aus der WO 2016/116348 A1 und der DE 199 01 080 A1 bekannt.

Der vorliegenden Erfindung liegt die Aufgabe zugrunde, ein Verfahren zu Steuerung eines Befüllvorganges eines Betriebsflüssigkeitsbehälters bereitzustellen, mittels dem ein kontrolliertes Betanken ermöglicht ist, mittels dem stets genau eine vordefinierte Füllmenge des Betriebsflüssigkeitsbehälters erreicht werden kann, und mittels dem beim Betankungsvorgang und auch bei einem Nachtankvorgang weniger Betriebsflüssigkeit aus dem Einfüllrohr austritt.

Diese der vorliegenden Erfindung zugrundeliegende Aufgabe wird durch ein Verfahren zur Steuerung eines Befüllvorganges eines Betriebsflüssigkeitsbehälters mit den Merkmalen des Anspruchs 1 gelöst. Vorteilhafte Ausgestaltungen des erfindungsgemäßen Verfahrens sind in den abhängigen Ansprüchen beschrieben.

Im Genaueren wird die der vorliegenden Erfindung zugrundeliegende Aufgabe durch ein Verfahren zur Steuerung eines Befüllvorganges eines Betriebsflüssigkeitsbehälters gelöst, wobei der Betriebsflüssigkeitsbehälter über ein in diesen mündendes Einfüllrohr mittels einer Befülleinrichtung befüllbar ist und ein Entlüftungsventil aufweist, das elektrisch zwischen einer Offenstellung, in der der Betriebsflüssigkeitsbehälter mittels des Entlüftungsventils mit der Atmosphäre zumindest mittelbar fluidverbunden ist, und einer Schließstellung, in der der Betriebsflüssigkeitsbehälter mittels des Entlüftungsventils von der Atmosphäre fluidgetrennt ist, betätigbar ist. Das erfindungsgemäße Verfahren weist folgende Verfahrensschritte auf:
a) Überführen des Entlüftungsventils in dessen Offenstellung;
b) Bestimmen eines Füllstandes des Betriebsflüssigkeitsbehälters;
c) Reduzieren eines Entlüftungsvolumenstroms durch das Entlüftungsventil, wenn der Füllstand des Betriebsflüssigkeitsbehälters einen vorbestimmten Abschaltfüllstand erreicht oder überschritten hat;
d) Ermitteln eines Befüllstopps der Befülleinrichtung; und
e) Überführen des Entlüftungsventils in dessen Schließstellung nach einer vorbestimmten Zeitdauer nach Ermitteln des Befüllstopps.

Das erfindungsgemäße Verfahren zur Steuerung eines Befüllvorganges eines Betriebsflüssigkeitsbehälters weist viele Vorteile auf. Ein Vorteil ist, dass eine für einen Nachfüllvorgang/Nachtankvorgang bestimmte Nachfüllmenge von Betriebsflüssigkeit definiert werden kann, wodurch der Nachfüllvorgang kontrolliert abläuft. Ein weiterer Vorteil ist, dass beim oder kurz nach einem Befüllstopp, also einem Beenden einer Einfüllung von Betriebsflüssigkeit in das Einfüllrohr mittels der Befülleinrichtung, eine Steiggeschwindigkeit einer Betriebsflüssigkeitssäule im Einfüllrohr vermindert ist und folglich eine Aufwallung einer Betriebsflüssigkeit in dem Einfüllrohr des Betriebsflüssigkeitsbehälters erheblich vermindert ist, was zum Ergebnis hat, dass bei einem Befüllstopp erheblich weniger oder gar keine Betriebsflüssigkeit aus dem Einfüllrohr in die Umgebung des Betriebsflüssigkeitsbehälters austritt. Ein weiterer Vorteil ist, dass mittels des erfindungsgemäßen Verfahrens ein Einfüllstutzen konstruktiv einfacher ausgestaltet sein kann, da die Steiggeschwindigkeit der Betriebsflüssigkeitssäule vermindert ist, so dass weniger konstruktive bzw. bauliche Maßnahmen getroffen werden müssen, um einem Austreten von Betriebsflüssigkeit aus dem Einfüllstutzen entgegenzuwirken.

Denn durch Reduzieren der effektiven Entlüftungsquerschnittsfläche des Entlüftungsventils wird ein Entlüftungsvolumenstrom durch das Entlüftungsventil reduziert, wodurch sich während eines Befüllvorganges im Betriebsflüssigkeitsbehälter ein Überdruck aufbaut, der über die Einstellung des Entlüftungsvolumenstroms einstellbar ist. Der Aufbau eines Überdrucks im Betriebsflüssigkeitsbehälter wiederum setzt voraus, dass der Entlüftungsvolumenstrom durch das Entlüftungsventil kleiner ist als ein Befüllvolumenstrom mittels der Befülleinrichtung. Wenn beispielsweise die Befülleinrichtung einen Befüllvolumenstrom von 40 1/min ausgibt, der Entlüftungsvolumenstrom durch das Entlüftungsventil aber weniger als 40 1/min beträgt (beispielsweise 20 1/min), dann steigt der Druck innerhalb des Betriebsflüssigkeitsbehälters an. Der Druckaufbau wiederum hat zur Folge, dass die Betriebsflüssigkeit innerhalb des Einfüllrohrs ansteigt. Die Betriebsflüssigkeit steigt dabei innerhalb des Einfüllrohrs langsamer an, als wenn das Entlüftungsventil gänzlich in dessen Schließstellung überführt werden würde. Aufgrund des langsameren Ansteigens der Betriebsflüssigkeit innerhalb des Einfüllrohrs tritt bei einem Befüllstopp, der üblicherweise durch Verschließen einer Schnüffelbohrung der Befülleinrichtung mittels der im Einfüllrohr ansteigenden Betriebsflüssigkeit eingeleitet wird, keine oder eine erheblich geringere Menge von Betriebsflüssigkeit aus dem Einfüllrohr aus.

Da das Entlüftungsventil nach Ermitteln des Befüllstopps der Befülleinrichtung für die vorbestimmte Zeitdauer geöffnet verbleibt und somit der Betriebsflüssigkeitsbehälter mit der Atmosphäre mittels des Entlüftungsventils weiterhin fluidverbunden ist, fällt ein Pegel der Betriebsflüssigkeit innerhalb des Einfüllrohrs auf eine vorbestimmte Höhe. Folglich wird nach Erreichen des Abschaltfüllstandes und nach dem Befüllstopp stets eine reproduzierbare Pegelhöhe innerhalb des Einfüllrohrs realisiert, so dass ein Nachtankvorgang stets bei einer vorbestimmten Pegelhöhe innerhalb des Einfüllrohrs beginnt.

Vorzugsweise wird im Verfahrensschritt a) das Entlüftungsventil in dessen Offenstellung bei Ermitteln eines Tankereignisses bzw. eines Tankwunsches überführt. Vorzugsweise wird ein Tankereignis bzw. ein Tankwunsch ermittelt, wenn eine Öffnung einer Tancklappe des Kraftfahrzeugs detektiert wird, wenn die Tankklappe also von deren Schließstellung in deren Öffnungsstellung überführt wird. Weiter vorzugsweise wird ein Tankereignis bzw. ein Tankwunsch ermittelt, wenn das Einführen einer Befülleinrichtung (eines Zapfventils) in das Einfüllrohr detektiert wird. Ferner kann auch ein Tankereignis durch Signal durch den Fahrer und/oder durch ein von einer Zapfsäule übermitteltes Signal ermittelt werden.

Der Verfahrensschritt b) wird kontinuierlich oder in regelmäßigen zeitlichen Abständen wiederholend zumindest bis zu dem Zeitpunkt ausgeführt, bis der Füllstand des Betriebsflüssigkeitsbehälters den vorbestimmten Abschaltfüllstand erreicht hat.

Vorzugsweise wird in dem Verfahrensschritt b) der Füllstand des Betriebsflüssigkeitsbehälters mittels eines Füllstandgebers ermittelt. Der Füllstandgeber ist vorzugsweise als ein einen Schwimmer aufweisender Hebelgeber, oder als Ultraschall-Füllstandsensor oder als kapazitiver Füllstandsensor ausgebildet. Beschränkungen hinsichtlich der Ausgestaltung des Füllstandgebers bestehen insofern nicht.

Eine Reduzierung des Entlüftungsvolumenstroms bedeutet eine Reduzierung der Menge der durch das Entlüftungsventil aus dem Betriebsflüssigkeitsbehälter ausgetriebenen Gase bei einer vorgegebenen Druckdifferenz zwischen dem Betriebsflüssigkeitsbehälterinnenraum und dem Betriebsflüssigkeitsbehälteraußenraum.

Der Entlüftungsvolumenstrom ist proportional zu einer Druckdifferenz zwischen dem Betriebsflüssigkeitsbehälterinnenraum und dem Betriebsflüssigkeitsbehälteraußenraum. Ferner ist der Entlüftungsvolumenstrom proportional zu einem Strömungswiderstand des Entlüftungsventils bzw. zu dem Strömungswiderstand durch das Entlüftungsventil.

Der Entlüftungsvolumenstrom wird erfindungsgemäß durch Verändern des Strömungswiderstandes des Entlüftungsventils verändert. Im Genaueren wird erfindungsgemäß der Entlüftungsvolumenstrom durch Erhöhen des Strömungswiderstandes des Entlüftungsventil reduziert.

Der Strömungswiderstand wird vorzugsweise durch alternierendes Öffnen und Schließen des Entlüftungsventils verändert. Umso länger die Schließphasen des Entlüftungsventils im Vergleich zu den Öffnungsphasen des Entlüftungsventils sind, desto größer ist der resultierende Strömungswiderstand des Entlüftungsventils, und desto kleiner ist der Entlüftungsvolumenstrom. Dabei wird vorzugsweise ein Ventilkörper in Richtung einer Offenstellung und in Richtung einer Schließstellung elektrisch hin- und her bewegt. Es ist nicht notwendig, dass der Ventilkörper einen Ventilsitz des Entlüftungsventils gänzlich schließt. Bereits eine Verminderung eines Abstandes des Ventilkörpers zum Ventilsitz erhöht den Strömungswiderstand des Entlüftungsventils.

Der Entlüftungsvolumenstrom wird vorzugsweise über eine vorgegebene Zeit gemittelt. Vorzugsweise wird der Entlüftungsvolumenstrom über 0,05 s, weiter vorzugsweise über 0,1 s, weiter vorzugsweise über 0,2 s und weiter vorzugsweise über 0,3 s gemittelt.

Das Entlüftungsventil ist vorzugsweise als Proportionalventil ausgebildet, so dass das Entlüftungsventil kontinuierlich zwischen einer Offenstellung, in der der Strömungswiderstand des Entlüftungsventils minimal ist, und einer Schließstellung, in der der Strömungswiderstand des Entlüftungsventils maximal ist, verstellbar ist. In der Offenstellung ist vorzugsweise ein Abstand zwischen einem Ventilkörper und einem Ventilsitz maximal, wohingegen in der Schließstellung der Ventilkörper den Ventilsitz verschließt, so dass in der Schließstellung des Entlüftungsventils dieses den Betriebsflüssigkeitsbehälterinnenraum von der Atmosphäre fluidtrennt. Dadurch wird eine effektive Entlüftungsquerschnittsfläche des Entlüftungsventils verändert. Die effektive Entlüftungsquerschnittsfläche des Entlüftungsventils ist die freie Öffnung (Fläche der Öffnung) des Entlüftungsventils, durch die das aus dem Betriebsflüssigkeitsbehälter ausgetriebene Gas (bei einem Befüllvorgang) hindurchfließen muss. Die effektive Entlüftungsquerschnittsfläche kann auch als effektive Entlüftungsöffnung des Entlüftungsventils bezeichnet werden.

Die Entlüftungsquerschnittsfläche des Entlüftungsventils ist die freie Öffnung (Fläche der Öffnung) des Entlüftungsventils, durch die das aus dem Betriebsflüssigkeitsbehälter ausgetriebene Gas (bei einem Befüllvorgang) hindurchfließen muss. Die effektive Entlüftungsquerschnittsfläche kann auch als effektive Entlüftungsöffnung des Entlüftungsventils bezeichnet werden.

Wenn die effektive Entlüftungsquerschnittsfläche des Entlüftungsventils reduziert wird, wird das Entlüftungsventil in eine Zwischenstellung zwischen der Offenstellung und der Schließstellung betätigt/verfahren.

Das Entlüftungsventil weist in dessen Offenstellung eine bauartabhängige Maximalentlüftungsquerschnittsfläche auf. In der Schließstellung des Entlüftungsventils beträgt die Entlüftungsquerschnittsfläche vorzugsweise Null.

In dem Verfahrensschritt c) wird die Entlüftungsquerschnittsfläche des Entlüftungsventils auf eine geringere als die Maximalentlüftungsquerschnittsfläche reduziert. Vorzugsweise wird im Verfahrensschritt c) die effektive Entlüftungsquerschnittsfläche auf weniger als 60%, weiter vorzugsweise auf weniger als 50%, weiter vorzugsweise auf weniger als 40%, weiter vorzugsweise auf weniger als 30%, weiter vorzugsweise auf weniger als 20% und weiter vorzugsweise auf weniger als 10% der Maximalentlüftungsquerschnittsfläche reduziert.

Das Reduzieren der effektiven Entlüftungsquerschnittsfläche wird vorzugsweise durch teilweises und/oder stufenloses Verschließen eines Ventilsitzes des Entlüftungsventils mittels eines Ventilkörpers des Entlüftungsventils realisiert. In der Offenstellung eines entsprechend ausgebildeten Entlüftungsventils weist der Ventilkörper zum Ventilsitz, der auch als Ventilöffnung bezeichnet werden kann, einen Entlüftungsventilspezifischen Maximalabstand auf. In der Schließstellung eines entsprechend ausgebildeten Entlüftungsventils verschließt der Ventilkörper den Ventilsitz, so dass die Entlüftungsquerschnittsfläche Null ist.

Auch kann ein Entlüftungsventil eine Entlüftungsöffnung aufweisen, die mittels eines senkrecht zu einer Flächennormalen der Entlüftungsöffnung betätigbaren/verschiebbaren Schiebers variierbar/veränderbar ist. Ferner kann ein Entlüftungsventil eine Drosselklappe aufweisen. Beschränkungen hinsichtlich der Ausbildung des Entlüftungsventils bestehen erfindungsgemäß nicht.

Die Befülleinrichtung kann auch als Betriebsflüssigkeitsausgabeeinrichtung bezeichnet werden. Üblicherweise ist die Befülleinrichtung als Zapfventil ausgebildet.

In dem Verfahrensschritt d) wird der Befüllstopp der Befülleinrichtung vorzugsweise mittels eines Schallsensors ermittelt. Die Befülleinrichtung erzeugt bei dem Beenden des Befüllvorganges ein charakteristisches Geräusch, dass mittels eines Schallsensors, der vorzugsweise mit einem Frequenzfilter gekoppelt ist, das lediglich die für den Abschaltvorgang charakteristischen Frequenzen durchlässt, detektierbar ist.

Der Abschaltfüllstand kann auch als Abschaltfüllvolumen bezeichnet werden.

Vorzugsweise ist das Verfahren derart ausgebildet, dass sich ein erster Entlüftungsvolumenstrom durch das Entlüftungsventil nach einer Ermittlung, dass der Füllstand des Betriebsflüssigkeitsbehälters den vorbestimmten Abschaltfüllstand erreicht oder überschritten hat, und vor Beginn der vorbestimmten Zeitdauer von einem zweiten Entlüftungsvolumenstrom durch das Entlüftungsventil während der vorbestimmten Zeitdauer unterscheidet.

Vorzugsweise ist der erste Entlüftungsvolumenstrom kleiner als der zweite Entlüftungsvolumenstrom. Weiter vorzugsweise ist der erste Entlüftungsvolumenstrom größer als der zweite Entlüftungsvolumenstrom.

Vorzugsweise ist das Verfahren derart ausgebildet, dass der Entlüftungsvolumenstrom durch intermittierendes Betätigen des Entlüftungsventils zwischen dessen Offenstellung und dessen Schließstellung verändert wird.

Vorzugsweise ist das Verfahren derart ausgebildet, dass es folgende Verfahrensschritte aufweist:
b1) Bestimmen einer Füllgeschwindigkeit, mit der der Betriebsflüssigkeitsbehälter mit der Betriebsflüssigkeit befüllt wird; und
b2) Bestimmen einer Entlüftungsvolumenstromreduktion, um die der Entlüftungsvolumenstrom durch das Entlüftungsventil nach Erreichen des Abschaltfüllstandes reduziert wird, als Funktion der Füllgeschwindigkeit, wobei die Entlüftungsvolumenstromreduktion mit steigender Füllgeschwindigkeit abfallend ist.

Das entsprechend ausgebildete Verfahren bietet den Vorteil, dass beim oder kurz nach Beenden des Befüllvorganges unabhängig von Einfüllgeschwindigkeit und somit unabhängig von der Einfüllrate der Befülleinrichtung nochmals weniger Betriebsflüssigkeit aus dem Einfüllrohr in die Umgebung des Betriebsflüssigkeitsbehälters austritt, da bei einer großen Füllgeschwindigkeit und somit größeren Befüllrate die Entlüftungsvolumenstromreduktion niedriger ist als bei einer niedrigeren Füllgeschwindigkeit/Befüllrate. Somit kann unabhängig von der Befüllrate bzw. unabhängig von der Füllgeschwindigkeit nach Erreichen des vorbestimmten Abschaltfüllstandes stets eine im Wesentlichen konstante und/oder einstellbare Steiggeschwindigkeit der Betriebsflüssigkeit innerhalb des Einfüllrohrs erreicht werden.

Die Füllgeschwindigkeit wird vorzugsweise basierend auf dem im Verfahrensschritt b) bestimmten Füllstand und basierend auf der zum Erreichen dieses Füllstandes benötigten Zeit bestimmt.

Alternativ und/oder zusätzlich wird die Füllgeschwindigkeit mittels einer im Einfüllrohr angeordneten Durchflussmesseinrichtung bestimmt.

Weiter alternativ und/oder zusätzlich wird die Füllgeschwindigkeit über eine vorzugsweise drahtlose Datenleitung von der Befülleinrichtung versendet.

Weiter vorzugsweise ist das Verfahren derart ausgebildet, dass es folgende Verfahrensschritte aufweist:
f) Ermitteln eines weiteren Befüllstopps der Befülleinrichtung;
g) Einstellen einer Entlüftungsvolumenströmung durch das Entlüftungsventil (30) bei Ermittlung des weiteren Befüllstopps;
h) Überführen des Entlüftungsventils in dessen Schließstellung nach einer vorbestimmten zweiten Zeitdauer nach Ermitteln des Befüllstopps.

Das entsprechend ausgebildete Verfahren bietet den Vorteil, dass kontrollierte Nachtankvorgänge ermöglicht sind, wobei bei den Nachtankvorgängen keine oder zumindest eine verminderte Menge von Betriebsflüssigkeit aus dem Einfüllrohr austritt, da die Steiggeschwindigkeit der Betriebsflüssigkeit innerhalb des Einfüllrohrs im Vergleich zu aus dem Stand der Technik bekannten Steuerungsverfahren reduziert ist.

Die in Verfahrensschritt g) eingestellte Entlüftungsvolumenströmung ist geringer/kleiner als eine maximale Entlüftungsvolumenströmung durch das Entlüftungsventil. Bei der maximalen Entlüftungsvolumenströmung durch das Entlüftungsventil ist ein Abstand eines Ventilkörpers zum Ventilsitz des Entlüftungsventils maximal.

Der Verfahrensschritt f) wird kontinuierlich oder in regelmäßigen zeitlichen Abständen durchgeführt.

Die zweite Zeitdauer ist vorzugsweise kürzer/kleiner als die vorbestimmte Zeitdauer, in der in Verfahrensschritt e) das Entlüftungsventil nach Ermitteln des Befüllstopps in dessen Zwischenstellung zwischen dessen Offenstellung und dessen Schließstellung verbleibt.

Wenn das Entlüftungsventil als Proportionalventil ausgebildet ist und kontinuierlich zwischen dessen Offenstellung und Schließstellung verstellbar ist, dann ist der Verfahrensschritt g) äquivalent mit einem Überführen des Entlüftungsventils in eine Zwischenstellung zwischen der Offenstellung und der Schließstellung bei Ermittlung des weiteren Befüllstopps.

In der Zwischenstellung zwischen der Offenstellung und der Schließstellung weist das Entlüftungsventil eine Entlüftungsquerschnittsfläche auf, die geringer ist als deren Maximalentlüftungsquerschnittsfläche.

In dem Verfahrensschritt h) kann das Entlüftungsventil alternativ oder zusätzlich nach einer vorbestimmten Anzahl von Nachfüllvorgängen in dessen Schließstellung überführt werden.

Weiterhin wird die der vorliegenden Erfindung zugrundeliegende Aufgabe durch ein Verfahren zur Steuerung eines Befüllvorganges eines Betriebsflüssigkeitsbehälters mit den Merkmalen des Anspruchs 6 gelöst. Dabei ist der Betriebsflüssigkeitsbehälter über ein in den Betriebsflüssigkeitsbehälter mündendes Einfüllrohr mittels einer Befülleinrichtung befüllbar, wobei in dem Betriebsflüssigkeitsbehälter ein elektrisch betätigbares Auslassventil angeordnet ist, das elektrisch zwischen einer Offenstellung, in der das Einfüllrohr mit einem Betriebsflüssigkeitsbehälterinnenraum mittels des Auslassventils fluidverbunden ist, und einer Schließstellung, in der das Einfüllrohr mittels des Auslassventils von dem Betriebsflüssigkeitsbehälterinnenraum fluidgetrennt ist, betätigbar ist. Das erfindungsgemäße Verfahren weist folgende Verfahrensschritte auf:
a) Überführen des Auslassventils in dessen Offenstellung;
b) Bestimmen eines Füllstandes des Betriebsflüssigkeitsbehälters;
c) Reduzieren einer Öffnungsquerschnittsfläche einer das Einfüllrohr mit dem Betriebsflüssigkeitsbehälterinnenraum fluidverbindenden Öffnung des Auslassventils, wenn der Füllstand des Betriebsflüssigkeitsbehälters einen vorbestimmten Abschaltfüllstand erreicht oder überschritten hat;
d) Ermitteln eines Befüllstopps der Befülleinrichtung; und
e) Überführen des Auslassventils in dessen Schließstellung nach einer vorbestimmten Zeitdauer nach Ermitteln des Befüllstopps.

Das erfindungsgemäße Verfahren zur Steuerung eines Befüllvorganges eines Betriebsflüssigkeitsbehälters weist viele Vorteile auf. Ein Vorteil ist, dass eine für einen Nachfüllvorgang/Nachtankvorgang bestimmte Nachfüllmenge von Betriebsflüssigkeit definiert werden kann, wodurch der Nachfüllvorgang kontrolliert abläuft. Ein weiterer Vorteil ist, dass beim oder kurz nach einem Befüllstopp, also einem Beenden einer Einfüllung von Betriebsflüssigkeit in das Einfüllrohr mittels der Befülleinrichtung, eine Steiggeschwindigkeit einer Betriebsflüssigkeitssäule im Einfüllrohr vermindert ist und folglich eine Aufwallung einer Betriebsflüssigkeit in dem Einfüllrohr des Betriebsflüssigkeitsbehälters erheblich vermindert ist, was zum Ergebnis hat, dass bei einem Befüllstopp erheblich weniger oder gar keine Betriebsflüssigkeit aus dem Einfüllrohr in die Umgebung des Betriebsflüssigkeitsbehälters austritt. Ein weiterer Vorteil ist, dass mittels des erfindungsgemäßen Verfahrens ein Einfüllstutzen konstruktiv einfacher ausgestaltet sein kann, da die Steiggeschwindigkeit der Betriebsflüssigkeitssäule vermindert ist, so dass weniger Maßnahmen getroffen werden müssen, um einem Austreten von Betriebsflüssigkeit aus dem Einfüllstutzen entgegenzuwirken.

Denn durch Reduzieren der Öffnungsquerschnittsfläche des Auslassventils wird eine Ausströmflußrate der Betriebsflüssigkeit von dem Einfüllrohr in den Betriebsflüssigkeitsbehälter, im Genaueren in den Betriebsflüssigkeitsbehälterinnenraum, reduziert, was wiederum hat zur Folge, dass die Betriebsflüssigkeit innerhalb des Einfüllrohrs ansteigt. Die Betriebsflüssigkeit steigt dabei innerhalb des Einfüllrohrs langsamer an, als wenn das Auslassventil gänzlich in dessen Schließstellung überführt werden würde. Aufgrund des langsameren Ansteigens der Betriebsflüssigkeit innerhalb des Einfüllrohrs tritt bei einem Befüllstopp, der üblicherweise durch Verschließen einer Schnüffelbohrung der Befülleinrichtung mittels der im Einfüllrohr ansteigenden Betriebsflüssigkeit eingeleitet wird, keine oder eine erheblich geringere Menge von Betriebsflüssigkeit aus dem Einfüllrohr aus.

Da das Auslassventil nach Ermitteln des Befüllstopps der Befülleinrichtung für die vorbestimmte Zeitdauer in der Stellung verbleibt, in der die Öffnungsquerschnittsfläche reduziert ist oder nach dem Überführen in die Schließstellung für die vorbestimmte Zeitdauer in die Stellung überführt wird, in der die Öffnungsquerschnittsfläche reduziert ist, und der Betriebsflüssigkeitsbehälterinnenraum mit dem Einfüllrohr weiterhin fluidverbunden ist, fällt ein Pegel der Betriebsflüssigkeit innerhalb des Einfüllrohrs auf eine vorbestimmte Höhe. Folglich wird nach Erreichen des Abschaltfüllstandes und nach dem Befüllstopp stets eine reproduzierbare Pegelhöhe innerhalb des Einfüllrohrs realisiert, so dass ein Nachtankvorgang stets bei einer vorbestimmten Pegelhöhe innerhalb des Einfüllrohrs beginnt, so dass ein definiertes Nachtankvolumen eingestellt werden kann.

Vorzugsweise wird im Verfahrensschritt a) das Auslassventil in dessen Offenstellung bei Ermitteln eines Tankereignisses bzw. eines Tankwunsches überführt. Vorzugsweise wird ein Tankereignis bzw. ein Tankwunsch ermittelt, wenn eine Öffnung einer Tancklappe des Kraftfahrzeugs detektiert wird, wenn die Tankklappe also von deren Schließstellung in deren Öffnungsstellung überführt wird. Weiter vorzugsweise wird ein Tankereignis bzw. ein Tankwunsch ermittelt, wenn das Einführen einer Befülleinrichtung (eines Zapfventils) in das Einfüllrohr detektiert wird. Ferner kann auch ein Tankereignis durch Signal durch den Fahrer und/oder durch ein von einer Zapfsäule übermitteltes Signal ermittelt werden.

Der Verfahrensschritt b) wird kontinuierlich oder in regelmäßigen zeitlichen Abständen wiederholend zumindest bis zu dem Zeitpunkt ausgeführt, bis der Füllstand des Betriebsflüssigkeitsbehälters den vorbestimmten Abschaltfüllstand erreicht hat.

Vorzugsweise wird in dem Verfahrensschritt b) der Füllstand des Betriebsflüssigkeitsbehälters mittels eines Füllstandgebers ermittelt. Der Füllstandgeber ist vorzugsweise als ein einen Schwimmer aufweisender Hebelgeber, oder als Ultraschall-Füllstandsensor oder als kapazitiver Füllstandsensor ausgebildet. Beschränkungen hinsichtlich der Ausgestaltung des Füllstandgebers bestehen insofern nicht.

Die Öffnungsquerschnittsfläche des Auslassventils ist die freie Öffnung des Auslassventils, durch die die Betriebsflüssigkeit aus dem Einfüllrohr in den Betriebsflüssigkeitsbehälter, im Genaueren in den Betriebsflüssigkeitsbehälterinnenraum (bei einem Befüllvorgang) hindurchfließen muss.

Wenn die Öffnungsquerschnittsfläche des Auslassventils reduziert wird, wird das Auslassventil in eine Zwischenstellung zwischen der Offenstellung und der Schließstellung betätigt/verfahren.

Das Auslassventil weist in dessen Offenstellung eine bauartabhängige Maximalöffnungsquerschnittsfläche auf. In der Schließstellung des Auslassventils beträgt die Öffnungsquerschnittsfläche vorzugsweise Null.

In dem Verfahrensschritt c) wird die Öffnungsquerschnittsfläche des Auslassventils auf eine geringere als die Maximalöffnungsquerschnittsfläche reduziert. Vorzugsweise wird im Verfahrensschritt c) die Öffnungsquerschnittsfläche auf weniger als 60%, weiter vorzugsweise auf weniger als 50%, weiter vorzugsweise auf weniger als 40%, weiter vorzugsweise auf weniger als 30%, weiter vorzugsweise auf weniger als 20% und weiter vorzugsweise auf weniger als 10% der Maximalöffnungsquerschnittsfläche reduziert.

Das Reduzieren der Öffnungsquerschnittsfläche wird vorzugsweise durch teilweises Verschließen eines Ventilsitzes des Auslassventils mittels eines Ventilkörpers des Auslassventils realisiert. In der Offenstellung eines entsprechend ausgebildeten Auslassventils weist der Ventilkörper zum Ventilsitz, der auch als Ventilöffnung bezeichnet werden kann, einen Entlüftungsventilspezifischen Maximalabstand auf. In der Schließstellung eines entsprechend ausgebildeten Öffnungsventils verschließt der Ventilkörper den Ventilsitz, so dass die Öffnungsquerschnittsfläche Null ist.

Auch kann ein Auslassventil eine Auslassöffnung aufweisen, die mittels eines senkrecht zu einer Flächennormalen der Auslassöffnung betätigbaren/verschiebbaren Schiebers variierbar/veränderbar ist. Das Auslassventil kann ferner eine verschwenkbare Klappe aufweisen, mittels der die Auslassöffnung verschließbar ist. Beschränkungen hinsichtlich der Ausführung des Auslassventils, das auch als Rückschlagventil und/oder Kontrollventil bezeichnet werden kann, bestehen erfindungsgemäß nicht.

Die Befülleinrichtung kann auch als Betriebsflüssigkeitsausgabeeinrichtung bezeichnet werden. Üblicherweise ist die Befülleinrichtung als Zapfventil ausgebildet.

In dem Verfahrensschritt d) wird der Befüllstopp der Befülleinrichtung vorzugsweise mittels eines Schallsensors ermittelt. Die Befülleinrichtung erzeugt bei dem Beenden des Befüllvorganges ein charakteristisches Geräusch, dass mittels eines Schallsensors, der vorzugsweise mit einem Frequenzfilter gekoppelt ist, das lediglich die für den Abschaltvorgang charakteristischen Frequenzen durchlässt, detektierbar ist.

Der Abschaltfüllstand kann auch als Abschaltfüllvolumen bezeichnet werden.

Vorzugsweise ist das Verfahren derart ausgebildet, dass es folgende Verfahrensschritte aufweist:
b1) Bestimmen einer Füllgeschwindigkeit, mit der der Betriebsflüssigkeitsbehälter mit der Betriebsflüssigkeit befüllt wird; und
b2) Bestimmen einer Öffnungsquerschnittsflächenreduktion, um die die Öffnungsquerschnittsfläche des Auslassventils nach Erreichen des Abschaltfüllstandes reduziert wird, als Funktion der Füllgeschwindigkeit, wobei die Öffnungsquerschnittsflächenreduktion mit steigender Füllgeschwindigkeit abfallend ist.

Das entsprechend ausgebildete Verfahren bietet den Vorteil, dass beim oder kurz nach Beenden des Befüllvorganges unabhängig von Einfüllgeschwindigkeit und somit unabhängig von der Einfüllrate der Befülleinrichtung nochmals weniger Betriebsflüssigkeit aus dem Einfüllrohr in die Umgebung des Betriebsflüssigkeitsbehälters austritt, da bei einer großen Füllgeschwindigkeit und somit größeren Befüllrate die Öffnungsquerschnittsflächenreduktion niedriger ist als bei einer niedrigeren Füllgeschwindigkeit/Befüllrate. Somit kann unabhängig von der Befüllrate bzw. unabhängig von der Füllgeschwindigkeit nach Erreichen des vorbestimmten Abschaltfüllstandes stets eine im Wesentlichen konstante Steiggeschwindigkeit der Betriebsflüssigkeit innerhalb des Einfüllrohrs erreicht werden.

Die Füllgeschwindigkeit wird vorzugsweise basierend auf dem im Verfahrensschritt b) bestimmten Füllstand und basierend auf der zum Erreichen dieses Füllstandes benötigten Zeit bestimmt.

Alternativ und/oder zusätzlich wird die Füllgeschwindigkeit mittels einer im Einfüllrohr angeordneten Durchflussmesseinrichtung bestimmt.

Weiter alternativ und/oder zusätzlich wird die Füllgeschwindigkeit über eine vorzugsweise drahtlose Datenleitung von der Befülleinrichtung versendet.

Weiter vorzugsweise ist das Verfahren derart ausgebildet, dass es folgende Verfahrensschritte aufweist:
f) Ermitteln eines weiteren Befüllstopps der Befülleinrichtung;
g) Überführen des Auslassventils in eine Zwischenstellung zwischen der Offenstellung und der Schließstellung bei Ermittlung des weiteren Befüllstopps;
h) Überführen des Auslassventils in dessen Schließstellung nach einer vorbestimmten zweiten Zeitdauer (t2) nach Ermitteln des Befüllstopps.

Das entsprechend ausgebildete Verfahren bietet den Vorteil, dass kontrollierte Nachtankvorgänge ermöglicht sind, wobei bei den Nachtankvorgängen keine oder zumindest eine verminderte Menge von Betriebsflüssigkeit aus dem Einfüllrohr austritt, da die Steiggeschwindigkeit der Betriebsflüssigkeit innerhalb des Einfüllrohrs im Vergleich zu aus dem Stand der Technik bekannten Steuerungsverfahren reduziert ist.

In der Zwischenstellung zwischen der Offenstellung und der Schließstellung weist das Auslassventil eine Öffnungsquerschnittsfläche auf, die geringer ist als deren Maximalöffnungsquerschnittsfläche.

Der Verfahrensschritt f) wird kontinuierlich oder in regelmäßigen zeitlichen Abständen durchgeführt.

Die zweite Zeitdauer ist vorzugsweise kürzer/kleiner als die vorbestimmte Zeitdauer, in der in Verfahrensschritt e) das Auslassventil nach Ermitteln des Befüllstopps in dessen Zwischenstellung zwischen dessen Offenstellung und dessen Schließstellung verbleibt.

Vorzugsweise ist das Verfahren derart ausgebildet, dass die vorbestimmte Zeitdauer eine Funktion der Differenz zwischen einem Ziel-Füllstand und dem ermittelten Füllstand ist.

Die vorbestimmte Zeitdauer t1, die auch als erste vorbestimmte Zeitdauer bezeichnet werden kann, ist folglich wie folgt als Funktion der Differenz zwischen dem Ziel-Füllstand VZ und dem ermittelten Füllstand VI, der auch als Ist-Füllstand bezeichnet werden kann, darstellbar: t1 = f(VZ-VI).

Die Funktion f(VZ-VI) ist vorzugsweise monoton ansteigend. Weiter vorzugsweise ist die Funktion f(VZ-VI) linear. Weiter vorzugsweise ist die Funktion f(VZ-VI) parabelförmig.

Weiter vorzugsweise ist das Verfahren derart ausgebildet, dass die Funktion eine mit der Differenz zwischen dem Ziel-Füllstand und dem ermittelten Füllstand monoton steigende Funktion ist, wobei die Funktion bei einer Differenz zwischen dem Ziel-Füllstand und dem ermittelten Füllstand von Null ebenfalls Null ist.

Folglich gilt t1 = f(VZ-VI); t1 = 0 wenn VZ-VI=0. Daher beträgt die vorbestimmte Zeitdauer 0s, wenn der Füllstand (Ist-Füllstand) gleich oder größer als der Ziel-Füllstand ist.

Das entsprechend ausgebildete Verfahren hat zum Ergebnis, dass umso größer die Differenz zwischen dem ermittelten Füllstand, also dem Ist-Füllstand, und dem Ziel-Füllstand ist, desto weiter sinkt der Pegel der Betriebsflüssigkeit in dem Einfüllrohr nach dem Ermitteln des Befüllstopps ab, so dass bei einem möglichen Nachtankvorgang eine größere Menge Betriebsflüssigkeit nachgetankt werden kann, bevor seitens der Befülleinrichtung ein weiterer Befüllstopp durchgeführt wird. Folglich wird die mögliche Nachtankmenge umso kleiner, desto kleiner die Differenz zwischen dem Ziel-Füllstand und dem Ist-Füllstand ist.

Die Differenz zwischen dem ermittelten Füllstand und dem Ziel-Füllstand wird vorzugsweise in Litern oder in Millimetern angegeben, wobei bei einer Angabe des Füllstandes in Metern der Pegel der Betriebsflüssigkeit im Betriebsflüssigkeitsbehälter gemessen/bestimmt wird. Bei einer Angabe des Füllstandes in Litern wird das Füllvolumen des Betriebsflüssigkeitsbehälters angegeben/bestimmt.

Vorzugsweise ist das Verfahren derart ausgebildet, dass die vorbestimmte zweite Zeitdauer eine Funktion der Differenz zwischen einem Ziel-Füllstand und dem ermittelten Füllstand ist.

Die vorbestimmte zweite Zeitdauer t2 ist folglich wie folgt als Funktion der Differenz zwischen dem Ziel-Füllstand VZ und dem ermittelten Füllstand VI, der auch als Ist-Füllstand bezeichnet werden kann, darstellbar: t2 = f(VZ-VI).

Die Funktion f(VZ-VI) ist vorzugsweise monoton ansteigend. Weiter vorzugsweise ist die Funktion f(VZ-VI) linear. Weiter vorzugsweise ist die Funktion f(VZ-VI) parabelförmig.

Weiter vorzugsweise ist das Verfahren derart ausgebildet, dass die zweite Zeitdauer kürzer ist als die vorbestimmte erste Zeitdauer, in der in Verfahrensschritt e) das Entlüftungsventil oder das Auslassventil nach Ermitteln des Befüllstopps in dessen Zwischenstellung zwischen dessen Offenstellung und dessen Schließstellung verbleibt.

Das entsprechend ausgebildete Verfahren ermöglicht somit, dass in den Nachtankvorgängen sukzessive kleiner Nachtankmengen ermöglicht sind. Dies ist für einen Betanker oft wünschenswert, da durch sukzessiv kleiner werdende Nachtankmengen bei dem Betanker der Eindruck entsteht, dass sich der Füllstand des Betriebsflüssigkeitsbehälters einem Maximalfüllstand asymptotisch annähert.

Weiter vorzugsweise ist das Verfahren derart ausgebildet, dass es folgende Verfahrensschritte aufweist:
b1) Bestimmen einer Füllgeschwindigkeit, mit der der Betriebsflüssigkeitsbehälter mit der Betriebsflüssigkeit befüllt wird; und
b3) Bestimmen des vorbestimmten Abschaltfüllstandes als Funktion der Füllgeschwindigkeit, wobei der vorbestimmte Abschaltfüllstand mit steigender Füllgeschwindigkeit abfallend ist.

Das entsprechend ausgebildete Verfahren bietet den Vorteil, dass beim oder kurz nach Beenden des Befüllvorganges nochmals weniger Betriebsflüssigkeit aus dem Einfüllrohr in die Umgebung des Betriebsflüssigkeitsbehälters austritt, da bei einer großen Füllgeschwindigkeit und somit Befüllrate der vorbestimmte Abschaltfüllstand niedriger ist als bei einer niedrigeren Füllgeschwindigkeit/Befüllrate.
Die Füllgeschwindigkeit wird vorzugsweise basierend auf dem im Verfahrensschritt b) bestimmten Füllstand und der zum Erreichen dieses Füllstandes benötigten Zeit bestimmt.

Alternativ und/oder zusätzlich wird die Füllgeschwindigkeit mittels einer im Einfüllrohr angeordneten Durchflussmesseinrichtung bestimmt.
Weiter alternativ und/oder zusätzlich wird die Füllgeschwindigkeit über eine vorzugsweise drahtlose Datenleitung von der Befülleinrichtung versendet.
Ferner liegt der vorliegenden Erfindung die Aufgabe zugrunde, ein Betriebsflüssigkeitsbehältersystem bereitzustellen, das einen gesteuerten Befüllvorgang und einen gesteuerten Nachfüllvorgang ermöglicht. Diese der vorliegenden Erfindung zugrundeliegende Aufgabe wird durch ein Betriebsflüssigkeitsbehältersystem mit den Merkmalen des Anspruchs 14 gelöst. Vorteilhafte Ausgestaltungen des erfindungsgemäßen Betriebsflüssigkeitsbehältersystems sind in den von Anspruch 14 abhängigen Ansprüchen beschrieben.

Im Genaueren wird die der vorliegenden Erfindung zugrundeliegende Aufgabe durch ein Betriebsflüssigkeitsbehältersystem für ein Kraftfahrzeug gelöst, wobei das Betriebsflüssigkeitsbehältersystem
- zumindest einen Betriebsflüssigkeitsbehälter, in dessen Betriebsflüssigkeitsbehälterinnenraum ein Einfüllrohr zum Befüllen des Betriebsflüssigkeitsbehälterinnenraums mit einer Betriebsflüssigkeit mündet,
- zumindest ein Entlüftungsventil zum Belüften und/oder Entlüften des Betriebsflüssigkeitsbehälters, wobei das Entlüftungsventil elektrisch zwischen einer Offenstellung und einer Schließstellung betätigbar ist, wobei in der Offenstellung der Betriebsflüssigkeitsbehälterinnenraum mittels des Entlüftungsventils mit der Atmosphäre zumindest mittelbar fluidverbunden ist, und wobei in der Schließstellung der Betriebsflüssigkeitsbehälterinnenraum von der Atmosphäre mittels des Entlüftungsventils fluidgetrennt ist,
- zumindest einen Füllstandsensor zum Ermitteln eines Füllstands der Betriebsflüssigkeit im Betriebsflüssigkeitsbehälter, und
- eine elektronische Steuerungseinrichtung, die mit dem Füllstandsensor über eine erste Datenleitung zum Empfangen von Daten gekoppelt ist, und die mit dem Entlüftungsventil über eine zweite Datenleitung zum Ausgeben von Steuersignalen gekoppelt ist, aufweist.

Das erfindungsgemäße Betriebsflüssigkeitsbehältersystem ist dadurch gekennzeichnet, dass die Steuerungseinrichtung dazu ausgebildet ist, ein Verfahren zur Steuerung eines Befüllvorganges des Betriebsflüssigkeitsbehälters nach einem der Ansprüche 1 bis 5 oder 9 bis 13 auszuführen, sofern dieser von Anspruch 1 abhängig ist.

Das erfindungsgemäße Betriebsflüssigkeitsbehältersystem ermöglicht ein gesteuertes Befüllen eines Betriebsflüssigkeitsbehälters, bei dem eine Nachfüllmenge für einen Nachtankvorgang definiert werden kann, und bei dem während des Befüllvorganges und bei einem möglichen Nachtanken weniger Betriebsflüssigkeit aus dem Einfüllrohr austritt.

Denn durch Reduzieren der effektiven Entlüftungsquerschnittsfläche des Entlüftungsventils wird ein Entlüftungsvolumenstrom durch das Entlüftungsventil reduziert, wodurch sich während eines Befüllvorganges im Betriebsflüssigkeitsbehälter ein Überdruck aufbaut. Der Druckaufbau wiederum hat zur Folge, dass die Betriebsflüssigkeit innerhalb des Einfüllrohrs ansteigt. Die Betriebsflüssigkeit steigt dabei innerhalb des Einfüllrohrs langsamer an, als wenn das Entlüftungsventil gänzlich in dessen Schließstellung überführt werden würde. Aufgrund des langsameren Ansteigens der Betriebsflüssigkeit innerhalb des Einfüllrohrs tritt bei einem Befüllstopp, der üblicherweise durch Verschließen einer Schnüffelbohrung der Befülleinrichtung mittels der im Einfüllrohr ansteigenden Betriebsflüssigkeit eingeleitet wird, keine oder eine erheblich geringere Menge von Betriebsflüssigkeit aus dem Einfüllrohr aus.

Da das Entlüftungsventil nach Ermitteln des Befüllstopps der Befülleinrichtung für die vorbestimmte Zeitdauer in einer Stellung verbleibt, in der die effektive Entlüftungsquerschnittsfläche reduziert ist und der Betriebsflüssigkeitsbehälter mit der Atmosphäre mittels des Entlüftungsventils weiterhin fluidverbunden ist, fällt ein Pegel der Betriebsflüssigkeit innerhalb des Einfüllrohrs auf eine vorbestimmte Höhe. Folglich wird nach Erreichen des Abschaltfüllstandes und nach dem Befüllstopp stets eine reproduzierbare Pegelhöhe innerhalb des Einfüllrohrs realisiert, so dass ein Nachtankvorgang stets bei einer vorbestimmten Pegelhöhe innerhalb des Einfüllrohrs beginnt.

Der Betriebsflüssigkeitsbehälter weist vorzugsweise eine Entlüftungsleitung auf, in der das Entlüftungsventil vorzugsweise angeordnet ist. Das Entlüftungsventil kann aber auch zwischen dem Betriebsflüssigkeitsbehälterinnenraum und der Entlüftungsleitung angeordnet sein. Ferner ist es auch möglich, dass das Entlüftungsventil an einem dem Betriebsflüssigkeitsbehälter abgewandten Ende der Entlüftungsleitung angeordnet ist. Ferner ist das Entlüftungsventil vorzugsweise in dem Betriebsflüssigkeitsbehälter integriert.

Der Betriebsflüssigkeitsbehälter kann beispielsweise als Kraftstoffbehälter zum Aufnehmen eines Ottokraftstoffs oder Dieselkraftstoff ausgebildet sein. Ferner kann der Betriebsflüssigkeitsbehälter als Harnstoffbehälter zum Aufnehmen einer wässrigen Harnstofflösung ausgebildet sein.

Eine elektrische Betätigung des Entlüftungsventils ist im Sinne der vorliegenden Erfindung als elektromechanische und/oder elektromagnetische Betätigung des Entlüftungsventils zu verstehen.

Im Genaueren werden durch das erfindungsgemäße Betriebsflüssigkeitsbehältersystem, im Genaueren durch die elektronische Steuerungseinrichtung folgende Verfahrensschritte ausgeführt:
- Ermitteln, ob ein Befüllvorgang des Betriebsflüssigkeitsbehälters gestartet wurde. Dies kann beispielsweise durch einen Sensor im Einfüllrohr bzw. in einem Einfüllstutzen des Einfüllrohrs erfolgen, der beispielsweise ein Zapfventil im Einfüllstutzen des Einfüllrohrs detektiert.
- Ausgeben eines Öffnungs-Steuersignals an das Entlüftungsventil zum Überführen des Entlüftungsventils in dessen Offenstellung nach der Ermittlung, dass ein Befüllvorgang gestartet wurde.
- Empfangen von einen Füllstand des Betriebsflüssigkeitsbehälters repräsentierenden Füllstanddaten von dem Füllstandsensor.
- Vergleichen des Füllstandes mit einem vorbestimmten Abschaltfüllstand.
- Ausgeben eines Reduzier-Steuersignals an das Entlüftungsventil, wenn der Füllstand des Betriebsflüssigkeitsbehälters den vorbestimmten Abschaltfüllstand erreicht oder überschritten hat.
- Ermitteln eines Befüllstopps der Befülleinrichtung. Die Befülleinrichtung erzeugt bei dem Beenden des Befüllvorganges ein charakteristisches Geräusch. Der Befüllstopp wird vorzugsweise mittels eines Schallsensors ermittelt, der vorzugsweise mit einem Frequenzfilter gekoppelt ist, das lediglich die für den Abschaltvorgang charakteristischen Frequenzen durchlässt, detektierbar ist.
- Ausgeben eines Schließ-Steuersignals an das Entlüftungsventil zum Überführen des Entlüftungsventils in dessen Schließstellung nach einer vorbestimmten Zeitdauer nach Ermitteln des Befüllstopps.

Vorzugsweise ist das Betriebsflüssigkeitsbehältersystem derart ausgebildet, dass das Entlüftungsventil diskret zwischen dessen Offenstellung und dessen Schließstellung elektrisch verstellbar ist.

Eine diskrete Verstellbarkeit des Entlüftungsventils bedeutet, dass das Entlüftungsventil gezielt lediglich in dessen Offenstellung oder in dessen Schließstellung verfahren/betätigt werden kann. Eine Reduzierung des Entlüftungsvolumenstroms wird bei einem entsprechend ausgebildeten Entlüftungsventil durch intermittierendes Verstellen des Entlüftungsventils zwischen dessen Offenstellung und dessen Schließstellung realisiert. Ein entsprechendes intermittierendes Betätigen des Entlüftungsventils kann auch als Takten und/oder als Pulsen des Entlüftungsventils bezeichnet werden.

Vorzugsweise ist das Betriebsflüssigkeitsbehältersystem derart ausgebildet, dass das Entlüftungsventil als Proportionalventil ausgebildet und kontinuierlich zwischen Offenstellung und dessen Schließstellung elektrisch verstellbar ist.

Vorzugsweise ist das Betriebsflüssigkeitsbehältersystem derart ausgebildet, dass es folgende Merkmale aufweist:
- das Betriebsflüssigkeitsbehältersystem weist ferner ein elektrisch betätigbares Auslassventil auf, das elektrisch zwischen einer Offenstellung, in der das Einfüllrohr mit dem Betriebsflüssigkeitsbehälterinnenraum fluidverbunden ist, und einer Schließstellung, in der das Einfüllrohr mittels des Auslassventils von dem Betriebsflüssigkeitsbehälterinnenraum fluidgetrennt ist, betätigbar ist; und
- die Steuerungseinrichtung ist dazu ausgebildet ein Verfahren zur Steuerung eines Befüllvorganges des Betriebsflüssigkeitsbehälters nach einem der der Ansprüche 6 bis 13 auszuführen, sofern dieser von Anspruch 6 abhängig ist.

Das Auslassventil, das auch als Rückschlagventil und/oder Kontrollventil bezeichnet werden kann, ist vorzugsweise im Mündungsbereich des Einfüllrohrs in den Betriebsflüssigkeitsbehälter angeordnet, so dass die Mündung des Einfüllrohrs mittels des Auslassventils verschließbar ist. Weiter vorzugsweise ist das Auslassventil in dem Einfüllrohr angeordnet.

Vorzugsweise weist das Betriebsflüssigkeitsbehältersystem einen Schallsensor auf, mittels dem ein Befüllstopp einer in das Einfüllrohr eingesetzten Befülleinrichtung detektierbar ist, wobei der Schallsensor mittels einer Datenleitung mit der Steuerungseinrichtung zum Übertragen von den Befüllstopp repräsentierenden Daten an die Steuerungseinrichtung verbunden ist. Der Schallsensor kann auch als Schwingungssensor ausgebildet und/oder bezeichnet werden. Mittels des Schwingungssensors lassen sich Schwingungen des Betriebsflüssigkeitsbehältersystems, also des Betriebsflüssigkeitsbehälters und/oder des Einfüllrohres und/oder anderer Komponenten des Betriebsflüssigkeitsbehältersystems detektieren.

Weitere Vorteile, Einzelheiten und Merkmale der Erfindung ergeben sich nachfolgend aus den erläuterten Ausführungsbeispielen. Dabei zeigen im Einzelnen:
- Figur 1:: ein Verfahrensablaufplan eines erfindungsgemäßen Verfahrens zur Steuerung eines Befüllvorganges eines Betriebsflüssigkeitsbehälters;
- Figur 2:: drei Diagramme zur Darstellung der Füllhöhe innerhalb eines Einfüllrohrs, des Füllstandes des Betriebsflüssigkeitsbehälters und der Entlüftungsvolumenströmung durch das Entlüftungsventil bei einer Befüllung eines Betriebsflüssigkeitsbehälters gemäß dem erfindungsgemäßen Verfahren; und
- Figur 3:: eine schematische Darstellung eines erfindungsgemäßen Betriebsflüssigkeitsbehältersystems.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

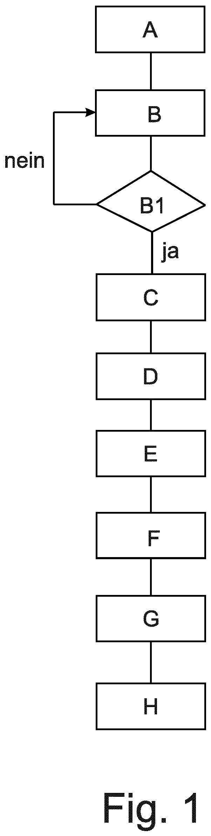

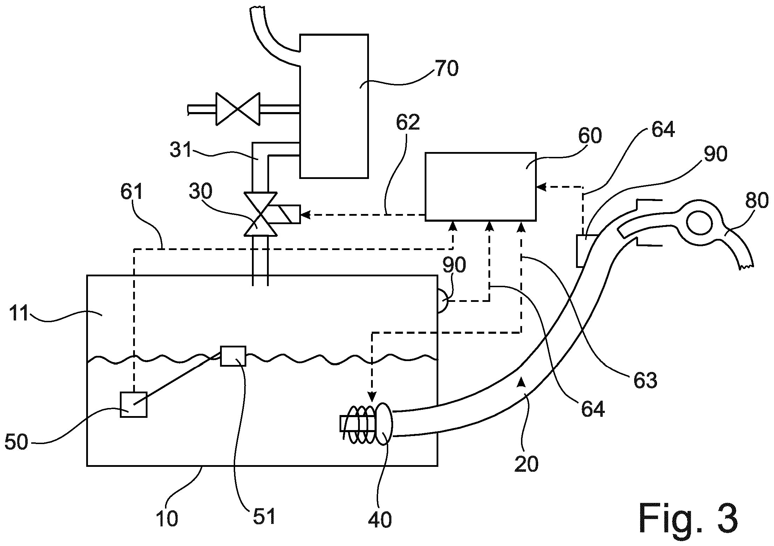

Figur 1 zeigt einen Verfahrensablaufplan eines erfindungsgemäßen Verfahrens zur Steuerung eines Befüllvorganges eines Betriebsflüssigkeitsbehälters 10, der schematisch in Figur 3 dargestellt ist.

Der Betriebsflüssigkeitsbehälter 10 ist Teil eines in Figur 3 dargestellten Betriebsflüssigkeitsbehältersystems. Dieses umfasst zumindest einen Betriebsflüssigkeitsbehälter 10, der in dem dargestellten Ausführungsbeispiel als Kraftstoffbehälter 10 ausgebildet ist. In den Betriebsflüssigkeitsbehälterinnenraum 11 mündet ein Einfüllrohr 20 zum Befüllen des Betriebsflüssigkeitsbehälterinnenraums 11 mit einer Betriebsflüssigkeit. Mittels einer als Zapfventil 80 ausgebildeten Befülleinrichtung 80 ist eine Betriebsflüssigkeit, im vorliegenden Ausführungsbeispiel Kraftstoff, über das Einfüllrohr 20 in den Betriebsflüssigkeitsbehälterinnenraum 11 einfüllbar. Das Betriebsflüssigkeitsbehältersystem weist ferner zumindest ein Entlüftungsventil 30 zum Belüften und/oder Entlüften des Betriebsflüssigkeitsbehälters 10 auf. Dabei ist das Entlüftungsventil 30 elektrisch zwischen einer Offenstellung und einer Schließstellung verfahrbar bzw. betätigbar. Zur Betätigung des Entlüftungsventils 30 ist ein Aktuator vorgesehen, der in Figur 3 rechts schematisch neben dem Entlüftungsventil 30 dargestellt ist. In der Offenstellung des Entlüftungsventils 30 ist der Betriebsflüssigkeitsbehälterinnenraum 11 mittels des Entlüftungsventils 30 mit der Atmosphäre fluidverbunden. Bei dem dargestellten Ausführungsbeispiel ist der Betriebsflüssigkeitsbehälterinnenraum 11 mittels einer Entlüftungsleitung 31, die in einen im vorliegenden Ausführungsbeispiel als Aktivkohlefilter 70 ausgebildetes Adsorptionsfilter 70 mündet, mit der Atmosphäre mittelbar fluidverbunden. In der Schließstellung des Entlüftungsventils 30 ist der Betriebsflüssigkeitsbehälterinnenraum 11 von der Atmosphäre mittels des Entlüftungsventils 30 fluidgetrennt.

Das Betriebsflüssigkeitsbehältersystem weist ferner ein elektrisch betätigbares Auslassventil 40 auf, das an einem in den Betriebsflüssigkeitsbehälterinnenraum 11 mündenden Ende des Einfüllrohrs 20 angeordnet ist. Das Auslassventil 40 kann auch als Rückschlagventil 40 und/oder als Kontrollventil 40 bezeichnet werden. Ferner ist es auch möglich, dass das Auslassventil 40 in dem Einfüllrohr 40 angeordnet sein kann. Das Auslassventil 40 ist elektrisch zwischen einer Offenstellung, in der das Einfüllrohr 20 mit dem Betriebsflüssigkeitsbehälterinnenraum 11 fluidverbunden ist, und einer Schließstellung, in das Einfüllrohr 20 mittels des Auslassventils 40 von dem Betriebsflüssigkeitsbehälterinnenraum 11 fluidgetrennt ist, betätigbar bzw. verstellbar. Das Auslassventil 40 ist vorzugsweise mit einer mechanischen Rückschlagfunktion/Rückschlagelement ausgestattet, so dass das Auslassventil 40 ein Rückschlagelement mit zusätzlicher Zwangsschließung aufweist.

In dem Betriebsflüssigkeitsbehälterinnenraum 11 ist ein Füllstandsensor 50 zum Ermitteln eines Füllstandes der Betriebsflüssigkeit im Betriebsflüssigkeitsbehälter 10 angeordnet. In dem dargestellten Ausführungsbeispiel ist der Füllstandsensor 50 als Hebelgeber 50 ausgebildet, der einen Schwimmkörper 51 aufweist, der mit dem Füllstandsensor 50 über einen Hebel verbunden ist. Das Betriebsflüssigkeitsbehältersystem weist ferner eine elektronische Steuerungseinrichtung 60 auf, die auch als ECU bezeichnet werden kann (englisch für Electronic Control Unit). Ferner weist das Betriebsflüssigkeitsbehältersystem eine Körperschallsensoreinrichtung 90 auf, die in dem dargestellten Ausführungsbeispiel zwei Schallsensoren 90 bzw. Mikrofone 90 aufweist. Ein Schallsensor 90 ist an dem Einfüllrohr 20 befestigt, und ein weiterer Schallsensor 90 ist an dem Betriebsflüssigkeitsbehälter 10 befestigt. Selbstverständlich kann die Körperschallsensoreinrichtung 90 auch lediglich einen einzigen Schallsensor 90 oder mehr als zwei Schallsensoren 90 aufweisen. Mittels der Schallsensoren 90 lässt sich ein bei einem Befüllstopp der Befülleinrichtung 80 charakteristisches Geräusch detektieren.

Die elektronische Steuerungseinrichtung 60 ist über eine erste Datenleitung 61 mit dem Füllstandsensor 50 verbunden, wobei über die erste Datenleitung 61 den Füllstand des Betriebsflüssigkeitsbehälters 10 repräsentierende Daten von dem Füllstandsensor 50 an die elektronische Steuerungseinrichtung 60 übertragbar sind. Die elektronische Steuerungseinrichtung 60 ist darüber hinaus über eine zweite Datenleitung 62 mit dem Entlüftungsventil 30 verbunden. Über die zweite Datenleitung 62 sind Steuerungssignale von der elektronischen Steuerungseinrichtung 60 an das Entlüftungsventil 30 übertragbar. Weiterhin ist die elektronische Steuerungseinrichtung 60 über eine dritte Datenleitung 63 mit dem Auslassventil 40 verbunden. Über die dritte Datenleitung 63 sind Steuerungssignale von der elektronischen Steuerungseinrichtung 60 an das Auslassventil 40 übertragbar. Ferner ist die elektronische Steuerungseinrichtung 60 über vierte Datenleitungen 64 mit den Schallsensoren 90 verbunden. Über die vierten Datenleitungen 64 sind einen Befüllstopp signalisierende Signale/Daten von den Schallsensoren 90 an die elektronische Steuerungseinrichtung 60 übertragbar.

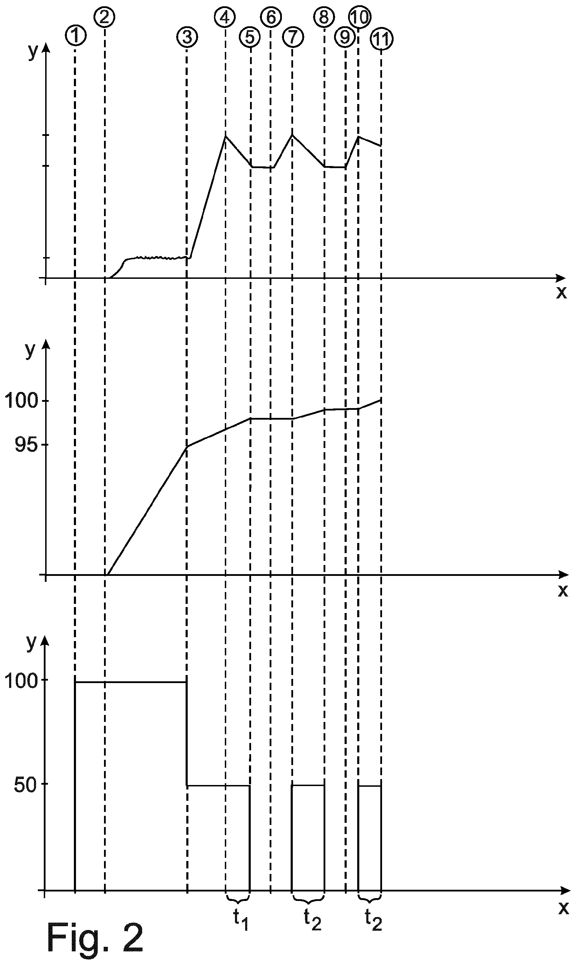

Im Folgenden wird unter Bezugnahme auf die Figuren 1 und 2 ein Verfahren zur Steuerung eines Befüllvorganges des Betriebsflüssigkeitsbehälters 10 beschrieben.

Wenn ein Betankungsereignis detektiert wird, das beispielsweise über einen Sensor innerhalb des Einfüllrohrs 20 bzw. innerhalb eines an dem dem Betriebsflüssigkeitsbehälter 10 abgewandten Ende des Einfüllrohrs 20 angeordneten Einfüllstutzen detektierbar ist, wird in einem Verfahrensschritt A von der elektronischen Steuerungseinrichtung 60 ein Öffnungs-Steuerungssignal an das Entlüftungsventil 30 ausgegeben, woraufhin das Entlüftungsventil 30 in dessen Offenstellung überführt wird, in der der Betriebsflüssigkeitsbehälterinnenraum 11 über die Entlüftungsleitung 31 und das Aktivkohlefilter 70 mit der Atmosphäre mittelbar fluidverbunden ist. Ferner wird im Verfahrensschritt A von der elektronischen Steuerungseinrichtung 60 ein Öffnungs-Steuerungssignal an das Auslassventil 40 ausgegeben, woraufhin das Auslassventil 40 in dessen Offenstellung überführt wird, in der das Einfüllrohr 20 mit dem Betriebsflüssigkeitsbehälterinnenraum 11 fluidverbunden ist.

Anschließend wird in einem Verfahrensschritte B ein Füllstand des Betriebsflüssigkeitsbehälters 10 ermittelt. Der Füllstand wird mittels des Füllstandsensors 50 ermittelt, der in dem dargestellten Ausführungsbeispiel als Hebelgeber ausgebildet ist. Selbstverständlich kann der Füllstandsensor 40 auch auf eine beliebige andere aus dem Stand der Technik bekannte Art und Weise ausgebildet sein. Der Füllstandsensor 50 übermittelt den Füllstand des Betriebsflüssigkeitsbehälters 10 repräsentierende Daten an die elektronische Steuerungseinrichtung 60.

Anschließend wird in einem Verfahrensschritte B1 mittels der elektronischen Steuerungseinrichtung 60 überprüft, ob der Füllstand, der auch als Ist-Füllstand bezeichnet werden kann, des Betriebsflüssigkeitsbehälters 10 einen vorbestimmten Abschaltfüllstand erreicht oder überschritten hat. Wenn der Füllstand des Betriebsflüssigkeitsbehälters 10 unterhalb des vorbestimmten Abschaltfüllstands ist, wird zu Verfahrensschritt B zurückgesprungen, wohingegen zu Verfahrensschritt C fortgefahren wird, wenn der Füllstand des Betriebsflüssigkeitsbehälters 10 den vorbestimmten Abschaltfüllstand erreicht oder überschritten hat.

In Figur 2 beträgt der vorbestimmte Abschaltfüllstand 95% eines Ziel-Füllstandes des Betriebsflüssigkeitsbehälters 10.

In dem Verfahrensschritt C wird von der elektronischen Steuerungseinrichtung 60 über die zweite Datenleitung 62 ein Reduzier-Steuerungssignal an das Entlüftungsventil 30 übertragen, woraufhin ein Entlüftungsvolumenstrom durch das Entlüftungsventil 30 reduziert wird, wobei gewährleistet bleibt, dass der Betriebsflüssigkeitsbehälter 10 weiterhin mittels des Entlüftungsventil 30 mit der Atmosphäre fluidverbunden bleibt.

Alternativ oder zusätzlich wird in dem Verfahrensschritt C von der elektronischen Steuerungseinrichtung 60 über die dritte Datenleitung 63 ein (weiteres) Reduzier-Steuerungssignal an das Auslassventil 40 übertragen, woraufhin eine Öffnungsquerschnittsfläche des Auslassventils 40 reduziert wird, wobei gewährleistet bleibt, dass der Betriebsflüssigkeitsbehälter 10 weiterhin mit dem Einfüllrohr 20 fluidverbunden bleibt.

In dem unteren Diagramm von Figur 2 ist ersichtlich, dass der Entlüftungsvolumenstrom durch das Entlüftungsventil 30 bei Empfang des Reduzier-Steuerungssignals auf 50% eines Maximalentlüftungsvolumenstroms reduziert wird. Da der Entlüftungsvolumenstrom reduziert ist, baut sich innerhalb des Betriebsflüssigkeitsbehälters 10 ein Überdruck auf. Dies hat zu Folge, dass die in das Einfüllrohr 20 eingeleitete Betriebsflüssigkeit langsamer in den Betriebsflüssigkeitsbehälterinnenraum 11 abfließen kann. Dies ist aus dem mittleren Diagramm von Figur 2 an der geringeren Steigung der Füllkurve nach Erreichen des Abschaltfüllstandes ersichtlich. Aufgrund des Druckaufbaus in dem Betriebsflüssigkeitsbehälter 10 steigt der Betriebsflüssigkeitspegel innerhalb des Einfüllrohrs 20 an, wie aus dem oberen Diagramm von Figur 2 ersichtlich ist. Die Betriebsflüssigkeit steigt dabei in dem Einfüllrohr 20 solange an, bis seitens der Befülleinrichtung 80 ein Befüllstopp ausgeführt wird.

In einem Verfahrensschritt D wird ermittelt, ob ein Befüllstopp der Befülleinrichtung 80 ausgeführt wurde. Der Befüllstopp wird mittels des Schallsensors 90 ermittelt. Die Schallsensoren 90 übermitteln über die vierten Datenleitungen 64 ein einen Befüllstopp repräsentierendes Signal an die elektronische Steuerungseinrichtung 60. Wenn kein Befüllstopp ausgeführt wurde, verbleibt das Verfahren in Verfahrensschritt D, wohingegen zu Verfahrensschritt E gesprungen wird, wenn ein Befüllstopp ermittelt wurde.

Der Befüllstopp ist im oberen Diagramm von Figur 2 ersichtlich, denn der Betriebsflüssigkeitspegel erreicht in dem Einfüllrohr 20 ein erstes Maximum.

Nach Verstreichen einer vorbestimmten ersten Zeitdauer t1 wird in dem Verfahrensschritt E von der elektronischen Steuerungseinrichtung 60 über die zweite Datenleitung 62 ein Schließ-Steuerungssignal an das Entlüftungsventil 30 übertragen, woraufhin das Entlüftungsventil 30 den Betriebsflüssigkeitsbehälterinnenraum 11 von der Atmosphäre fluidtrennt. Obschon in den Figuren nicht dargestellt, kann ein erster Entlüftungsvolumenstrom durch das Entlüftungsventil 30 nach der Ermittlung, dass der Füllstand des Betriebsflüssigkeitsbehälters 10 den vorbestimmten Abschaltfüllstand erreicht oder überschritten hat, und vor Beginn der vorbestimmten Zeitdauer t1 von einem zweiten Entlüftungsvolumenstrom durch das Entlüftungsventil 30 während der vorbestimmten Zeitdauer t1 unterscheiden. Beispielsweise kann der erste Entlüftungsvolumenstrom kleiner als der zweite Entlüftungsvolumenstrom sein. Ferner kann der erste Entlüftungsvolumenstrom größer als der zweite Entlüftungsvolumenstrom sein.

Alternativ oder zusätzlich wird nach Verstreichen der vorbestimmten ersten Zeitdauer t1 in dem Verfahrensschritt E von der elektronischen Steuerungseinrichtung 60 über die dritte Datenleitung 63 ein Schließ-Steuerungssignal an das Auslassventil 40 übertragen, woraufhin das Auslassventil 40 den Betriebsflüssigkeitsbehälterinnenraum 11 von dem Einfüllrohr 20 fluidtrennt.

Aus dem oberen Diagramm von Figur 2 ist ersichtlich, dass der Betriebsflüssigkeitspegel innerhalb des Einfüllrohrs 20 während der ersten Zeitdauer t1 auf einen vorbestimmten Pegel innerhalb des Einfüllrohrs 20 abfällt. Während dieser Zeitperiode fließt sich im Einfüllrohr 20 befindliche Betriebsflüssigkeit weiter in den Betriebsflüssigkeitsbehälterinnenraum 11, was an dem ansteigenden Füllstand des Betriebsflüssigkeitsbehälters 10 während der Zeitdauer t1 ersichtlich ist. In dem unteren Diagramm von Figur 2 ist ersichtlich, dass nach Verstreichen der vorbestimmten Zeitdauer t1 das Entlüftungsventil 20 und/oder das Auslassventil 40 in dessen/deren Schließstellung überführt wird.

Wenn seitens des Betankers nach Beenden des Befüllvorganges weitere Betriebsflüssigkeit mittels der Befülleinrichtung 80 in das Einfüllrohr 20 eingefüllt wird, steigt der Betriebsflüssigkeitspegel innerhalb des Einfüllrohrs 20 an, da das Entlüftungsventil 30 und/oder das Auslassventil 40 geschlossen ist/sind. Das Ansteigen des Betriebsflüssigkeitspegels innerhalb des Einfüllrohrs 20 ist im oberen Diagramm von Figur 2 ersichtlich.

In einem Verfahrensschritt F wird ermittelt, ob ein weiterer Befüllstopp der Befülleinrichtung 80 ausgeführt wurde. Der Befüllstopp wird mittels eines der Schallsensoren 90 ermittelt. Die Schallsensoren 90 übermitteln über die vierten Datenleitungen 64 ein einen Befüllstopp repräsentierendes Signal an die elektronische Steuerungseinrichtung 60. Wenn kein Befüllstopp ausgeführt wurde, verbleibt das Verfahren in Verfahrensschritt F, wohingegen zu Verfahrensschritt G gesprungen wird, wenn ein weiterer Befüllstopp ermittelt wurde.

In dem Verfahrensschritt G wird von der elektronischen Steuerungseinrichtung 60 über die zweite Datenleitung 62 ein Öffnungs-Steuerungssignal oder eine Abfolge von intermittierenden Öffnungs-Steuersignalen und Schließ-Steuersignalen an das Entlüftungsventil 30 übertragen, so dass sich über das Entlüftungsventil 30 eine vorgegebene Entlüftungsvolumenströmung einstellt. Aus dem unteren Diagramm von Figur 2 ist ersichtlich, dass in dem dargestellten Ausführungsbeispiel eine Entlüftungsvolumenströmung 50% der Maximalentlüftungsvolumenströmung beträgt. Alternativ oder zusätzlich wird in dem Verfahrensschritt G von der elektronischen Steuerungseinrichtung 60 über die dritte Datenleitung 63 ein (weiteres) Öffnungs-Steuerungssignal an das Auslassventil 40 übertragen, woraufhin das Auslassventil 40 in eine Zwischenstellung zwischen dessen Offenstellung und dessen Schließstellung überführt wird.

Da die Entlüftungsvolumenströmung durch das Entlüftungsventil 30 reduziert ist, baut sich während des Nachtankens innerhalb des Betriebsflüssigkeitsbehälters 10 ein Überdruck auf. Dies hat zu Folge, dass die in das Einfüllrohr 20 eingeleitete Betriebsflüssigkeit langsamer in den Betriebsflüssigkeitsbehälterinnenraum 11 abfließen kann. Aufgrund des Druckaufbaus in dem Betriebsflüssigkeitsbehälter 10 steigt der Betriebsflüssigkeitspegel innerhalb des Einfüllrohrs 20 an, wie aus dem oberen Diagramm von Figur 2 ersichtlich ist. Die Betriebsflüssigkeit steigt dabei in dem Einfüllrohr 20 solange an, bis seitens der Befülleinrichtung 80 ein Befüllstopp ausgeführt wird.

Nach Verstreichen einer vorbestimmten zweiten Zeitdauer t2 wird in dem Verfahrensschritt H von der elektronischen Steuerungseinrichtung 60 über die zweite Datenleitung 62 ein Schließ-Steuerungssignal an das Entlüftungsventil 30 übertragen, woraufhin das Entlüftungsventil 30 den Betriebsflüssigkeitsbehälterinnenraum 11 von der Atmosphäre fluidtrennt.

Alternativ oder zusätzlich wird nach Verstreichen der vorbestimmten zweiten Zeitdauer t2 in dem Verfahrensschritt H von der elektronischen Steuerungseinrichtung 60 über die dritte Datenleitung 63 ein Schließ-Steuerungssignal an das Auslassventil 40 übertragen, woraufhin das Auslassventil 40 den Betriebsflüssigkeitsbehälterinnenraum 11 von dem Einfüllrohr 20 fluidtrennt. Aus dem oberen Diagramm von Figur 2 ist ersichtlich, dass der Betriebsflüssigkeitspegel innerhalb des Einfüllrohrs 20 während der zweiten Zeitdauer t2 auf einen vorbestimmten Pegel innerhalb des Einfüllrohrs 20 abfällt. Während dieser Zeitperiode fließt sich im Einfüllrohr 20 befindliche Betriebsflüssigkeit weiter in den Betriebsflüssigkeitsbehälterinnenraum 11, was an dem ansteigenden Füllstand des Betriebsflüssigkeitsbehälters 10 während der Zeitdauer t2 ersichtlich ist. In dem unteren Diagramm von Figur 2 ist ersichtlich, dass nach Verstreichen der vorbestimmten zweiten Zeitdauer t2 das Entlüftungsventil 20 und/oder das Auslassventil 40 in dessen/deren Schließstellung überführt wird.

### Bezugszeichenliste

- 10: Betriebsflüssigkeitsbehälter / Tank
- 11: Betriebsflüssigkeitsbehälterinnenraum
- 20: Einfüllrohr
- 30: Entlüftungsventil
- 31: Entlüftungsleitung
- 40: Auslassventil / Rückschlagventil / Kontrollventil
- 50: Füllstandsensor
- 51: Schwimmer / Schwimmkörper (des Füllstandsensors)
- 60: elektronische Steuerungseinrichtung
- 61: erste Datenleitung (zwischen elektronischer Steuerungseinrichtung und Füllstandsensor)
- 62: zweite Datenleitung (zwischen elektronischer Steuerungseinrichtung und Entlüftungsventil)
- 63: dritte Datenleitung (zwischen elektronischer Steuerungseinrichtung und Auslassventil)
- 64: vierte Datenleitung (zwischen elektronischer Steuerungseinrichtung und Körperschallsensor)
- 70: Filter / Adsorptionsfilter / Aktivkohlefilter
- 80: Befülleinrichtung / Zapfventil
- 90: Schallsensor / Körperschallsensor / / Schwingungssensor / Mikrofon
- t1: (erste) vorbestimmte Zeitdauer
- t2: zweite vorbestimmte Zeitdauer

## Patentansprüche

1. Verfahren zur Steuerung eines Befüllvorganges eines Betriebsflüssigkeitsbehälters (10), der über ein in den Betriebsflüssigkeitsbehälter (10) mündendes Einfüllrohr (20) mittels einer Befülleinrichtung (80) befüllbar ist, wobei der Betriebsflüssigkeitsbehälter (10) ein Entlüftungsventil (30) aufweist, das elektrisch zwischen einer Offenstellung, in der der Betriebsflüssigkeitsbehälter (10) mittels des Entlüftungsventils (30) mit der Atmosphäre zumindest mittelbar fluidverbunden ist, und einer Schließstellung, in der der Betriebsflüssigkeitsbehälter (10) mittels des Entlüftungsventils (30) von der Atmosphäre fluidgetrennt ist, betätigbar ist, wobei das Verfahren folgende Verfahrensschritte aufweist:
a) Überführen des Entlüftungsventils (30) in dessen Offenstellung;
b) Bestimmen eines Füllstandes des Betriebsflüssigkeitsbehälters (10) **gekennzeichnet durch** die weiteren Verfahrensschritte:
c) Reduzieren eines Entlüftungsvolumenstroms durch das Entlüftungsventil (30), wenn der Füllstand des Betriebsflüssigkeitsbehälters (10) einen vorbestimmten Abschaltfüllstand erreicht oder überschritten hat;
d) Ermitteln eines Befüllstopps der Befülleinrichtung (80); und
e) Überführen des Entlüftungsventils (30) in dessen Schließstellung nach einer vorbestimmten Zeitdauer (t1) nach Ermitteln des Befüllstopps.

2. Verfahren nach Anspruch 1, **dadurch gekennzeichnet, dass** sich ein erster Entlüftungsvolumenstrom durch das Entlüftungsventil (30) nach einer Ermittlung, dass der Füllstand des Betriebsflüssigkeitsbehälters (10) den vorbestimmten Abschaltfüllstand erreicht oder überschritten hat, und vor Beginn der vorbestimmten Zeitdauer (t1) von einem zweiten Entlüftungsvolumenstrom durch das Entlüftungsventil (30) während der vorbestimmten Zeitdauer (t1) unterscheidet.

3. Verfahren nach einem der vorhergehenden Ansprüchen, **dadurch gekennzeichnet, dass** der Entlüftungsvolumenstrom durch intermittierendes Betätigen des Entlüftungsventils (30) zwischen dessen Offenstellung und dessen Schließstellung verändert wird.

4. Verfahren nach einem der vorhergehenden Ansprüchen, **gekennzeichnet durch** die folgenden Verfahrensschritte:
b1) Bestimmen einer Füllgeschwindigkeit, mit der der Betriebsflüssigkeitsbehälter (10) mit der Betriebsflüssigkeit befüllt wird; und
b2) Bestimmen einer Entlüftungsvolumenstromreduktion, um die der Entlüftungsvolumenstrom durch das Entlüftungsventil (30) nach Erreichen des Abschaltfüllstandes reduziert wird, als Funktion der Füllgeschwindigkeit, wobei die Entlüftungsvolumenstromreduktion mit steigender Füllgeschwindigkeit abfallend ist.

5. Verfahren nach einem der vorhergehenden Ansprüche, **gekennzeichnet durch** die folgenden Verfahrensschritte: f) Ermitteln eines weiteren Befüllstopps der Befülleinrichtung (80) ;
g) Einstellen einer Entlüftungsvolumenströmung durch das Entlüftungsventil (30) bei Ermittlung des weiteren Befüllstopps;
h) Überführen des Entlüftungsventils (30) in dessen Schließstellung nach einer vorbestimmten zweiten Zeitdauer (t2) nach Ermitteln des Befüllstopps.

6. Verfahren zur Steuerung eines Befüllvorganges eines Betriebsflüssigkeitsbehälters (10), der über ein in den Betriebsflüssigkeitsbehälter (10) mündendes Einfüllrohr (20) mittels einer Befülleinrichtung (80) befüllbar ist, wobei in dem Betriebsflüssigkeitsbehälter (10) ein elektrisch betätigbares Auslassventil (40) angeordnet ist, das elektrisch zwischen einer Offenstellung, in der das Einfüllrohr mit einem Betriebsflüssigkeitsbehälterinnenraum (11) mittels des Auslassventils (40) fluidverbunden ist, und einer Schließstellung, in der das Einfüllrohr (20) mittels des Auslassventils (40) von dem Betriebsflüssigkeitsbehälterinnenraum (11) fluidgetrennt ist, betätigbar ist, wobei das Verfahren folgende Verfahrensschritte aufweist:
a) Überführen des Auslassventils (40) in dessen Offenstellung;
b) Bestimmen eines Füllstandes des Betriebsflüssigkeitsbehälters (10) ;
c) Reduzieren einer Öffnungsquerschnittsfläche einer das Einfüllrohr (20) mit dem Betriebsflüssigkeitsbehälterinnenraum (11) fluidverbindenden Öffnung des Auslassventils (40), wenn der Füllstand des Betriebsflüssigkeitsbehälters (10) einen vorbestimmten Abschaltfüllstand erreicht oder überschritten hat **gekennzeichnet durch** die weiteren Verfahrensschritte:
d) Ermitteln eines Befüllstopps der Befülleinrichtung (80); und
e) Überführen des Auslassventils (40) in dessen Schließstellung nach einer vorbestimmten Zeitdauer (t1) nach Ermitteln des Befüllstopps.

7. Verfahren nach Anspruch 6, **gekennzeichnet durch** die folgenden Verfahrensschritte:
b1) Bestimmen einer Füllgeschwindigkeit, mit der der Betriebsflüssigkeitsbehälter (10) mit der Betriebsflüssigkeit befüllt wird; und
b2) Bestimmen einer Öffnungsquerschnittsflächenreduktion, um die die Öffnungsquerschnittsfläche des Auslassventils (40) nach Erreichen des Abschaltfüllstandes reduziert wird, als Funktion der Füllgeschwindigkeit, wobei die Öffnungsquerschnittsflächenreduktion mit steigender Füllgeschwindigkeit abfallend ist.

8. Verfahren nach einem der Ansprüche 6 oder 7, **gekennzeichnet durch** die folgenden Verfahrensschritte:
f) Ermitteln eines weiteren Befüllstopps der Befülleinrichtung (80) ;
g) Überführen des Auslassventils (40) in eine Zwischenstellung zwischen der Offenstellung und der Schließstellung bei Ermittlung des weiteren Befüllstopps;
h) Überführen des Auslassventils (40) in dessen Schließstellung nach einer vorbestimmten zweiten Zeitdauer (t2) nach Ermitteln des Befüllstopps.

9. Verfahren nach einem der vorhergehenden Ansprüche, **dadurch gekennzeichnet, dass** die vorbestimmte Zeitdauer (t1) eine Funktion der Differenz zwischen einem Ziel-Füllstand und dem ermittelten Füllstand ist.

10. Verfahren nach Anspruch 9, **dadurch gekennzeichnet, dass** die Funktion eine mit der Differenz zwischen dem Ziel-Füllstand und dem ermittelten Füllstand monoton steigende Funktion ist, wobei die Funktion bei einer Differenz zwischen dem Ziel-Füllstand und dem ermittelten Füllstand von Null ebenfalls Null ist.

11. Verfahren nach einem der vorhergehenden von Anspruch 5 oder Anspruch 8 abhängigen Ansprüche, **dadurch gekennzeichnet, dass** die vorbestimmte zweite Zeitdauer (t2) eine Funktion der Differenz zwischen einem Ziel-Füllstand und dem ermittelten Füllstand ist.

12. Verfahren nach Anspruch 11, **dadurch gekennzeichnet, dass** die zweite Zeitdauer (t2) kürzer ist als die vorbestimmte Zeitdauer, in der in Verfahrensschritt e) das Entlüftungsventil (30) oder das Auslassventil (40) nach Ermitteln des Befüllstopps in dessen Zwischenstellung zwischen dessen Offenstellung und dessen Schließstellung verbleibt.

13. Verfahren nach einem der vorhergehenden Ansprüche, **gekennzeichnet durch** die folgenden Verfahrensschritte:
b1) Bestimmen einer Füllgeschwindigkeit, mit der der Betriebsflüssigkeitsbehälter (10) mit der Betriebsflüssigkeit befüllt wird; und
b3) Bestimmen des vorbestimmten Abschaltfüllstandes als Funktion der Füllgeschwindigkeit, wobei der vorbestimmte Abschaltfüllstand mit steigender Füllgeschwindigkeit abfallend ist.

14. Betriebsflüssigkeitsbehältersystem für ein Kraftfahrzeug mit
- zumindest einem Betriebsflüssigkeitsbehälter (10), in dessen Betriebsflüssigkeitsbehälterinnenraum (11) ein Einfüllrohr (20) zum Befüllen des Betriebsflüssigkeitsbehälterinnenraums (11) mit einer Betriebsflüssigkeit mündet;
- zumindest einem Entlüftungsventil (30) zum Belüften und/oder Entlüften des Betriebsflüssigkeitsbehälters (10), wobei das Entlüftungsventil (30) elektrisch zwischen einer Offenstellung und einer Schließstellung betätigbar ist, wobei in der Offenstellung der Betriebsflüssigkeitsbehälterinnenraum (11) mittels des Entlüftungsventils (30) mit der Atmosphäre zumindest mittelbar fluidverbunden ist, und wobei in der Schließstellung der Betriebsflüssigkeitsbehälterinnenraum (11) von der Atmosphäre mittels des Entlüftungsventils (30) fluidgetrennt ist;
- zumindest einem Füllstandsensor (40) zum Ermitteln eines Füllstands der Betriebsflüssigkeit im Betriebsflüssigkeitsbehälter (10); und
- einer elektronischen Steuerungseinrichtung (50), die mit dem Füllstandsensor (40) über eine erste Datenleitung (51) zum Empfangen von Daten gekoppelt ist, und die mit dem Entlüftungsventil (30) über eine zweite Datenleitung (52) zum Ausgeben von Steuersignalen gekoppelt ist,
wobei das Betriebsflüssigkeitsbehältersystem **dadurch gekennzeichnet ist, dass** die Steuerungseinrichtung (50) dazu ausgebildet ist,
ein Verfahren zur Steuerung eines Befüllvorganges des Betriebsflüssigkeitsbehälters (10) nach einem der Ansprüche 1 bis 5 oder 9 bis 13 auszuführen, sofern dieser von Anspruch 1 abhängig ist.

15. Betriebsflüssigkeitsbehältersystem nach Anspruch 14, **dadurch gekennzeichnet, dass** das Entlüftungsventil (30) diskret zwischen dessen Offenstellung und dessen Schließstellung elektrisch verstellbar ist.

16. Betriebsflüssigkeitsbehältersystem nach Anspruch 14, **dadurch gekennzeichnet, dass** das Entlüftungsventil (30) als Proportionalventil (30) ausgebildet und kontinuierlich zwischen Offenstellung und dessen Schließstellung elektrisch verstellbar ist.

17. Betriebsflüssigkeitsbehältersystem nach einem der Ansprüche 14 bis 16, **gekennzeichnet durch** die folgenden Merkmale:
- das Betriebsflüssigkeitsbehältersystem weist ferner ein elektrisch betätigbares Auslassventil (40) auf, das elektrisch zwischen einer Offenstellung, in der das Einfüllrohr (20) mit dem Betriebsflüssigkeitsbehälterinnenraum (11) fluidverbunden ist, und einer Schließstellung, in der das Einfüllrohr (20) mittels des Auslassventils (40) von dem Betriebsflüssigkeitsbehälterinnenraum (11) fluidgetrennt ist, betätigbar ist; und
- die Steuerungseinrichtung (50) ist dazu ausgebildet ein Verfahren zur Steuerung eines Befüllvorganges des Betriebsflüssigkeitsbehälters (10) nach einem der der Ansprüche 6 bis 14 auszuführen, sofern dieser von Anspruch 6 abhängig ist.

18. Betriebsflüssigkeitsbehältersystem nach einem der Ansprüche 14 bis 17, **gekennzeichnet durch** folgende Merkmale:
- das Betriebsflüssigkeitsbehältersystem weist einen Schallsensor (90) auf, mittels dem ein Befüllstopp einer in das Einfüllrohr (20) eingesetzten Befülleinrichtung (80) detektierbar ist; und
- der Schallsensor (90) ist mittels einer Datenleitung (64) mit der Steuerungseinrichtung (60) zum Übertragen von den Befüllstopp repräsentierenden Daten an die Steuerungseinrichtung (60) verbunden.

## Claims

1. A method for controlling a filling process of an operating fluid container (10), which can be filled via a filler pipe (20) opening out into the operating fluid container (10) by means of a filling device (80), wherein the operating fluid container (10) has a venting valve (30), which can be electrically actuated between an open position, in which the operating fluid container (10) is fluidically connected to the atmosphere, at least indirectly, by means of the venting valve (30), and a closed position, in which the operating fluid container (10) is fluidically separated from the atmosphere by means of the venting valve (30), wherein the method has the following method steps:
a) moving the venting valve (30) into its open position;
b) determining a filling level of the operating fluid container (10); **characterized by** the further procedural steps:
c) reducing a venting volume flow through the venting valve (30) if the filling level of the operating fluid container (10) has reached or exceeded a predetermined shut-off filling level;
d) determining a filling stop of the filling device (80); and
e) moving the venting valve (30) into its closed position after a predetermined time period (t1) after determining the filling stop.

2. The method as claimed in claim 1, **characterized in that** a first venting volume flow through the venting valve (30) after a determination that the filling level of the operating fluid container (10) has reached or exceeded the predetermined shut-off filling level, and before the beginning of the predetermined time period (t1), differs from a second venting volume flow through the venting valve (30) during the predetermined time period (t1).

3. The method as claimed in one of the preceding claims, **characterized in that** the venting volume flow is changed by intermittently actuating the venting valve (30) between its open position and its closed position.

4. The method as claimed in one of the preceding claims, **characterized by** the following method steps:
b1) determining a filling speed at which the operating fluid container (10) is filled with the operating fluid; and
b2) determining a reduction of the venting volume flow by which the venting volume flow through the venting valve (30) is reduced after reaching the shut-off filling level, as a function of the filling speed, wherein the reduction of the venting volume flow is falling as the filling speed increases.

5. The method as claimed in one of the preceding claims, **characterized by** the following method steps:
f) determining a further filling stop of the filling device (80);
g) setting a venting volume flow through the venting valve (30) when the further filling stop is determined;
h) moving the venting valve (30) into its closed position after a predetermined second time period (t2) after determining the filling stop.

6. A method for controlling a filling process of an operating fluid container (10) which can be filled via a filler pipe (20) opening out into the operating fluid container (10) by means of a filling device (80), wherein there is arranged in the operating fluid container (10) an electrically actuable outlet valve (40), which can be electrically actuated between an open position, in which the filler pipe is fluidically connected to an interior space (11) in the operating fluid container by means of the outlet valve (40), and a closed position, in which the filler pipe (20) is fluidically separated from the interior space (11) in the operating fluid container by means of the outlet valve (40), wherein the method has the following method steps:
a) moving the outlet valve (40) into its open position;
b) determining a filling level of the operating fluid container (10);
c) reducing an opening cross-sectional area of an opening of the outlet valve (40) fluidically connecting the filler pipe (20) to the interior space (11) in the operating fluid container if the filling level of the operating fluid container (10) has reached or exceeded a predetermined shut-off filling level; **characterized by** the further procedural steps:
d) determining a filling stop of the filling device (80); and
e) moving the outlet valve (40) into its closed position after a predetermined time period (t1) after determining the filling stop.

7. The method as claimed in claim 6, **characterized by** the following method steps:
b1) determining a filling speed at which the operating fluid container (10) is filled with the operating fluid; and
b2) determining a reduction of the opening cross-sectional area by which the opening cross-sectional area of the outlet valve (40) is reduced after reaching the shut-off filling level, as a function of the filling speed, wherein the reduction of the opening cross-sectional area is falling as the filling speed increases.

8. The method as claimed in either of claims 6 and 7, **characterized by** the following method steps:
f) determining a further filling stop of the filling device (80);
g) moving the outlet valve (40) into an intermediate position between the open position and the closed position when the further filling stop is determined;
h) moving the outlet valve (40) into its closed position after a predetermined second time period (t2) after determining the filling stop.

9. The method as claimed in one of the preceding claims, **characterized in that** the predetermined time period (t1) is a function of the difference between a target filling level and the determined filling level.

10. The method as claimed in claim 9, **characterized in that** the function is a function monotonously rising with the difference between the target filling level and the determined filling level, wherein, when there is a difference between the target filling level and the determined filling level of zero, the function is likewise zero.

11. The method as claimed in one of the preceding claims dependent on claim 5 or claim 8, **characterized in that** the predetermined second time period (t2) is a function of the difference between a target filling level and the determined filling level.

12. The method as claimed in claim 11, **characterized in that** the second time period (t2) is shorter than the predetermined time period, in which, in method step e), the venting valve (30) or the outlet valve (40) remains in its intermediate position between its open position and its closed position after determining the filling stop.

13. The method as claimed in one of the preceding claims, **characterized by** the following method steps:
b1) determining a filling speed at which the operating fluid container (10) is filled with the operating fluid; and
b3) determining the predetermined shut-off filling level as a function of the filling speed, wherein the predetermined shut-off filling level is falling as the filling speed increases.

14. An operating fluid container system for a motor vehicle with
- at least one operating fluid container (10), in the interior space (11) of which operating fluid container a filler pipe (20) for filling the interior space (11) in the operating fluid container with an operating fluid opens out,
- at least one venting valve (30) for aerating and/or venting the operating fluid container (10), wherein the venting valve (30) can be electrically actuated between an open position and a closed position, wherein, in the open position, the interior space (11) in the operating fluid container is fluidically connected to the atmosphere, at least indirectly, by means of the venting valve (30), and wherein, in the closed position, the interior space (11) in the operating fluid container is fluidically separated from the atmosphere by means of the venting valve (30),
- at least one filling level sensor (40) for determining a filling level of the operating fluid in the operating fluid container (10), and
- an electronic control device (50), which is coupled to the filling level sensor (40) via a first data line (51) for receiving data, and which is coupled to the venting valve (30) via a second data line (52) for emitting control signals,
wherein the operating fluid container system is **characterized in that** the control device (50) is designed to perform a method for controlling a filling process of the operating fluid container (10) as claimed in one of claims 1 to 5 or 9 to 13, insofar as it is dependent on claim 1.

15. The operating fluid container system as claimed in claim 14, **characterized in that** the venting valve (30) can be electrically adjusted discretely between its open position and its closed position.

16. The operating fluid container system as claimed in claim 14, **characterized in that** the venting valve (30) is designed as a proportional valve (30) and can be electrically adjusted continuously between an open position and its closed position.

17. The operating fluid container system as claimed in one of claims 14 to 16, **characterized by** the following features:
- the operating fluid container system also has an electrically actuable outlet valve (40), which can be electrically actuated between an open position, in which the filler pipe (20) is fluidically connected to the interior space (11) in the operating fluid container, and a closed position, in which the filler pipe (20) is fluidically separated from the interior space (11) in the operating fluid container by means of the outlet valve (40), and
- the control device (50) is designed to perform a method for controlling a filling process of the operating fluid container (10) as claimed in one of claims 6 to 14, insofar as it is dependent on claim 6.

18. The operating fluid container system as claimed in one of claims 14 to 17, **characterized by** the following features:
- the operating fluid container system has a sound sensor (90), by means of which a filling stop of a filling device (80) inserted into the filler pipe (20) can be detected;
and
- the sound sensor (90) is connected by means of a data line (64) to the control device (60) for transmitting data representing the filling stop to the control device (60).

## Revendications

1. Procédé de commande d'un processus de remplissage d'un contenant de liquide de fonctionnement (10) qui peut être rempli au moyen d'un dispositif de remplissage (80) par l'intermédiaire d'un tube de remplissage (20) débouchant dans le contenant de liquide de fonctionnement (10), le contenant de liquide de fonctionnement (10) présentant une soupape de ventilation (30) qui peut être actionnée électriquement entre une position d'ouverture, dans laquelle le contenant de liquide de fonctionnement (10) est relié fluidiquement à l'atmosphère au moins indirectement au moyen de la soupape de ventilation (30), et une position de fermeture, dans laquelle le contenant de liquide de fonctionnement (10) est séparé fluidiquement de l'atmosphère au moyen de la soupape de ventilation (30), le procédé comportant les étapes de procédé suivantes :
a) transfert de la soupape de ventilation (30) dans sa position d'ouverture ;
b) définition d'un niveau de remplissage du contenant de liquide de fonctionnement (10),
**caractérisé par** les autres étapes de procédé :
c) réduction d'un débit volumique de ventilation à travers la soupape de ventilation (30) lorsque le niveau de remplissage du contenant de liquide de fonctionnement (10) a atteint ou a dépassé un niveau de désactivation prédéfini ;
d) détermination d'un arrêt de remplissage du dispositif de remplissage (80) ; et
e) transfert de la soupape de ventilation (30) dans sa position de fermeture après une durée prédéfinie (t1) après la détermination de l'arrêt de remplissage.

2. Procédé selon la revendication 1, **caractérisé en ce qu'**un premier débit volumique de ventilation à travers la soupape de ventilation (30), après détermination que le niveau de remplissage du contenant de liquide de fonctionnement (10) a atteint ou a dépassé le niveau de désactivation prédéfini, et avant le début de la durée prédéfinie (t1), est différent d'un second débit volumique de ventilation à travers la soupape de ventilation (30) pendant la durée prédéfinie (t1).

3. Procédé selon l'une des revendications précédentes, **caractérisé en ce que** le débit volumique de ventilation varie par l'actionnement intermittent de la soupape de ventilation (30) entre sa position d'ouverture et sa position de fermeture.

4. Procédé selon l'une des revendications précédentes, **caractérisé par** les étapes de procédé suivantes :
b1) définition d'une vitesse de remplissage à laquelle le contenant de liquide de fonctionnement (10) est rempli du liquide de fonctionnement ; et
b2) définition, en tant que fonction de la vitesse de remplissage, d'une réduction du débit volumique de ventilation par laquelle le débit volumique de ventilation à travers la soupape de ventilation (30) est réduit après l'atteinte du niveau de désactivation, la réduction du débit volumique de ventilation diminuant avec l'augmentation de la vitesse de remplissage.

5. Procédé selon l'une des revendications précédentes, **caractérisé par** les étapes de procédé suivantes :
f) détermination d'un autre arrêt de remplissage du dispositif de remplissage (80) ;
g) réglage d'un écoulement volumique de ventilation à travers la soupape de ventilation (30) lors de la détermination de l'autre arrêt de remplissage ;
h) transfert de la soupape de ventilation (30) dans sa position de fermeture après une seconde durée prédéfinie (t2) après la détermination de l'arrêt de remplissage.

6. Procédé de commande d'un processus de remplissage d'un contenant de liquide de fonctionnement (10) qui peut être rempli au moyen d'un dispositif de remplissage (80) par l'intermédiaire d'un tube de remplissage (20) débouchant dans le contenant de liquide de fonctionnement (10), une soupape de sortie (40) pouvant être actionnée électriquement étant disposée dans le contenant de liquide de fonctionnement (10), laquelle soupape de sortie peut être actionnée électriquement entre une position d'ouverture, dans laquelle le tube de remplissage est relié fluidiquement à un espace intérieur de contenant de liquide de fonctionnement (11) au moyen de la soupape de sortie (40), et une position de fermeture, dans laquelle le tube de remplissage (20) est séparé fluidiquement de l'espace intérieur de contenant de liquide de fonctionnement (11) au moyen de la soupape de sortie (40), le procédé comprenant les étapes de procédé suivantes :
a) transfert de la soupape de sortie (40) dans sa position d'ouverture ;
b) définition d'un niveau de remplissage du contenant de liquide de fonctionnement (10) ;
c) réduction d'une surface de section transversale d'une ouverture de la soupape de sortie (40) qui relie fluidiquement le tube de remplissage (20) à l'espace intérieur de contenant de liquide de fonctionnement (11) lorsque le niveau de remplissage du contenant de liquide de fonctionnement (10) a atteint ou a dépassé un niveau de désactivation prédéfini,
**caractérisé par** les autres étapes de procédé :
d) détermination d'un arrêt de remplissage du dispositif de remplissage (80) ; et
e) transfert de la soupape de sortie (40) dans sa position de fermeture après une durée prédéfinie (t1) après la détermination de l'arrêt de remplissage.

7. Procédé selon la revendication 6, **caractérisé par** les étapes de procédé suivantes :
b1) définition d'une vitesse de remplissage à laquelle le contenant de liquide de fonctionnement (10) est rempli du liquide de fonctionnement ; et
b2) définition, en tant que fonction de la vitesse de remplissage, d'une réduction de la surface de section transversale d'ouverture par laquelle la surface de section transversale d'ouverture de la soupape de sortie (40) est réduite après l'atteinte du niveau de désactivation, la réduction de la surface de section transversale d'ouverture diminuant avec l'augmentation de la vitesse de remplissage.

8. Procédé selon l'une des revendications 6 ou 7, **caractérisé par** les étapes de procédé suivantes :
f) détermination d'un autre arrêt de remplissage du dispositif de remplissage (80) ;
g) transfert de la soupape de sortie (40) dans une position intermédiaire entre la position d'ouverture et la position de fermeture lors de la détermination de l'autre arrêt de remplissage ;
h) transfert de la soupape de sortie (40) dans sa position de fermeture après une seconde durée prédéfinie (t2) après la détermination de l'arrêt de remplissage.

9. Procédé selon l'une des revendications précédentes, **caractérisé en ce que** la durée prédéfinie (t1) est une fonction de la différence entre un niveau de remplissage cible et le niveau de remplissage déterminé.

10. Procédé selon la revendication 9, **caractérisé en ce que** la fonction est une fonction qui augmente de manière monotone avec la différence entre le niveau de remplissage cible et le niveau de remplissage déterminé, la fonction étant également nulle lorsque la différence entre le niveau de remplissage cible et le niveau de remplissage déterminé est nulle.

11. Procédé selon l'une des revendications précédentes dépendant de la revendication 5 ou 8, **caractérisé en ce que** la seconde durée prédéfinie (t2) est une fonction de la différence entre un niveau de remplissage cible et le niveau de remplissage déterminé.

12. Procédé selon la revendication 11, **caractérisé en ce que** la seconde durée (t2) est plus courte que la durée prédéfinie dans laquelle, à l'étape e) du procédé, la soupape de ventilation (30) ou la soupape de sortie (40), après la détermination de l'arrêt de remplissage, reste dans sa position intermédiaire entre sa position d'ouverture et sa position de fermeture.

13. Procédé selon l'une des revendications précédentes, **caractérisé par** les étapes de procédé suivantes :
b1) définition d'une vitesse de remplissage à laquelle le contenant de liquide de fonctionnement (10) est rempli du liquide de fonctionnement ; et
b3) définition du niveau de désactivation prédéfini en tant que fonction de la vitesse de remplissage, le niveau de désactivation prédéfini diminuant avec l'augmentation de la vitesse de remplissage.

14. Système de contenant de liquide de fonctionnement destiné à un véhicule automobile, comportant
- au moins un contenant de liquide de fonctionnement (10), un tube de remplissage (20), lequel permet de remplir l'espace intérieur de contenant de liquide de fonctionnement (11) avec un liquide de fonctionnement, débouchant dans l'espace intérieur de contenant de liquide de fonctionnement (11) dudit contenant de liquide de fonctionnement ;
- au moins une soupape de ventilation (30) permettant d'aérer et/ou de désaérer le contenant de liquide de fonctionnement (10), la soupape de ventilation (30) pouvant être actionnée électriquement entre une position d'ouverture et une position de fermeture, l'espace intérieur de contenant de liquide de fonctionnement (11), en position d'ouverture, étant relié fluidiquement à l'atmosphère au moins indirectement au moyen de la soupape de ventilation (30), et l'espace intérieur de contenant de liquide de fonctionnement (11), en position de fermeture, étant séparé fluidiquement de l'atmosphère au moyen de la soupape de ventilation (30) ;
- au moins un capteur de niveau de remplissage (40) permettant de déterminer un niveau de remplissage du liquide de fonctionnement dans le contenant de liquide de fonctionnement (10) ; et
- un dispositif de commande électronique (50) qui est couplé au capteur de niveau de remplissage (40) par l'intermédiaire d'une première ligne de données (51) pour la réception de données, et qui est couplé à la soupape de ventilation (30) par l'intermédiaire d'une seconde ligne de données (52) pour l'émission de signaux de commande,
le système de contenant de liquide de fonctionnement étant **caractérisé en ce que** le dispositif de commande (50) est conçu pour mettre en oeuvre un procédé de commande d'un processus de remplissage du contenant de liquide de fonctionnement (10) selon l'une des revendications 1 à 5 ou 9 à 13, à condition que celui-ci dépende de la revendication 1.

15. Système de contenant de liquide de fonctionnement selon la revendication 14, **caractérisé en ce que** la soupape de ventilation (30) est réglable électriquement séparément entre sa position d'ouverture et sa position de fermeture.

16. Système de contenant de liquide de fonctionnement selon la revendication 14, **caractérisé en ce que** la soupape de ventilation (30) est conçue comme une soupape proportionnelle (30) et est réglable électriquement en continu entre sa position d'ouverture et sa position de fermeture.

17. Système de contenant de liquide de fonctionnement selon l'une des revendications 14 à 16, **caractérisé par** les caractéristiques suivantes :
- le système de contenant de liquide de fonctionnement présente en outre une soupape de sortie (40) pouvant être actionnée électriquement, laquelle peut être actionnée électriquement entre une position d'ouverture, dans laquelle le tube de remplissage (20) est relié fluidiquement à l'espace intérieur de contenant de liquide de fonctionnement (11), et une position de fermeture, dans laquelle le tube de remplissage (20) est séparé fluidiquement de l'espace intérieur de contenant de liquide de fonctionnement (11) au moyen de la soupape de sortie (40) ; et
- le dispositif de commande (50) est conçu pour mettre en œuvre un procédé de commande d'un processus de remplissage du contenant de liquide de fonctionnement (10) selon l'une des revendications 6 à 14, à condition que celui-ci dépende de la revendication 6.

18. Système de contenant de liquide de fonctionnement selon l'une des revendications 14 à 17, **caractérisé par** les caractéristiques suivantes :
- le système de contenant de liquide de fonctionnement présente un capteur de son (90) au moyen duquel peut être détecté un arrêt de remplissage d'un dispositif de remplissage (80) inséré dans le tube de remplissage (20) ; et
- le capteur de son (90) est relié, au moyen d'une ligne de données (64), au dispositif de commande (60) pour la transmission de données représentant l'arrêt de remplissage au dispositif de commande (60).
